# EUROPEAN PATENT SPECIFICATION

(11) **EP 3 267 793 B1**
(45) Date of publication and mention of the grant of the patent: **05.05.2021**
(21) Application number: 16762302.4
(22) Date of filing: 07.03.2016
(51) Int. Cl.: A01N 43/16, A01N 25/02, C05F 11/10, A01P 21/00, C05G 5/20, C05F 11/00, A01N 43/08

(54) **FIELD APPLICATION OF SUGARS TO INCREASE CROP YIELD**
FELDANWENDUNG VON ZUCKERN ZUR ERHÖHUNG DER ERNTEERGIEBIGKEIT
APPLICATION SUR CHAMP DE SUCRES POUR AUGMENTER LE RENDEMENT AGRICOLE

(30) Priority: 06.03.2015 US 201562129307 P; 02.02.2016 US 201662290234 P
(43) Date of publication of application: 17.01.2018
(73) Proprietor: Minn-Dak Farmers Cooperative, Wahpeton, ND 58075 (US)
(72) Inventor: WICKSTROM, Kurtis, H., Wahpeton, ND 58075 (US); METZGER, Michael, S., Wahpeton, ND 58075 (US)
(74) Representative: Korenberg, Alexander Tal
(86) International application number: PCT/US2016/021215
(87) International publication number: WO 2016/144886

(56) References cited:
- WO-A1-2009/135049
- CN-A- 104 230 588
- FR-A1- 2 605 185
- US-A- 4 581 057
- US-A- 5 958 104
- US-A1- 2002 166 147
- US-A1- 2008 182 752
- US-A1- 2013 065 762
- US-A1- 2013 065 762
- US-B1- 6 309 440
- US-B1- 6 309 440
- US-B1- 9 938 201
- US-B2- 7 741 244

## Description

### RELATED APPLICATION

The present application is related to U.S. Provisional Application No. 62/129,307 filed March 6, 2015 and U.S. Provisional Application No. 62/290,234 filed February 2, 2016.

### FIELD OF THE DISCLOSURE

The present invention is related to improving crop yield. More particularly, the present invention is directed to applying sugar compositions including monosaccharides, and/or disaccharides and/or polysaccharides and their direct application to soil to increase crop yield.

### BACKGROUND OF THE DISCLOSURE

Farming and growing crops generally involves a number of activities and stages throughout a growing season. In addition to planting and harvesting, a variety of enhancement steps are often utilized to provide optimal growing conditions and limit crop losses. Natural and/or synthetic fertilizers are often applied to soil or plant tissue to supply necessary nutrients including, for example; primary macronutrients such as nitrogen, phosphorous and potassium; secondary macronutrients such as calcium, magnesium and sulfur; and micronutrients such as copper, iron, manganese and the like. In addition to fertilizers, farmers often apply pesticides to control weeds, plant diseases and/or insects that can damage or destroy crops.

In addition to fertilizers and pesticides, foliar application of "sugar-water" is practiced in smaller gardens and some sugar solutions are offered commercially for foliar application such as, for example, Sun Energy Foliar Fertilizer Outdoor available from Micro Nutrients Online (www.micronutrientsonline.com). With these foliar applications, relatively small amounts of sugar are sprayed directly onto the leaves FR2605185 describes the application of oligosaccharides onto plants, seed or soil to improve the yield in the fields or in the green-house. Natural polysaccharides from algae, microorganisms, etc.. are processed to obtain oligosaccharides whose main components are glucose, fructose, galactose, pyruvic acid, etc... The rate of treatment is generally 0.5-5 Kg/ ha.

### SUMMARY OF THE DISCLOSURE

An aspect of the invention is set out in the independent claim. Particular embodiments of this aspect are set out in the dependent claims. Any subject matter contained herein that does not fall within the scope of the appended claims is considered as being useful for understanding the invention In this application the non-SI units Pound/acre (lbm/ac) are used, which may be converted to the respective metric unit g/m² by using the conversion factor 1.120851 ^{∗} 10⁻¹; the non-SI units tons/ acre (ton/ac) are used, which may be converted to the respective metric unit kg/m² by using the conversion factor 2.24170231 ^{∗} 10⁻¹; the non-SI units ounce/acre (oz/ac) are used, which may be converted to the respective metric unit g/m² by using the conversion factor 7.00532 ^{∗} 10⁻³; the non-SI units gallon/acre (gal/ ac) are used, which may be converted to the respective metric unit g/m² by using the conversion factor 9.35396 ^{∗} 10⁻⁴; the non-SI units bushel/acre are used, which may be converted to the respective metric unit g/m² by using the conversion factor 8.70776 ^{∗} 10⁻³; the non-SI unit "inch" is used, which may be converted to the respective metric unit "meter" by using the conversion factor 2.54 ^{∗} 10⁻²; the non-SI unit "foot" is used, which may be converted to the respective metric unit "meter" by using the conversion factor 3.048 ^{∗} 10⁻¹.

Disclosed herein are methods of enhancing crop yields through the application of much higher amounts of sugars, for example, monosaccharides, and/or disaccharides and/or polysaccharides, to soil. Generally, sugars are applied at a rate of at least 25 pounds per acre, more preferably at least 50 pounds per acre, and more preferably at rates of between 100-250 pounds per acre. Generally, the methods involve at least one application of the sugars directly to the soil prior to, during or after time of planting. Depending on the form and/or type of the sugars applied, application can be accomplished via broadcast spreading for solids or via spraying for liquids. Regardless of the application mechanism, the sugars are applied at a rate of at least 25 pounds of sugar per acre, more preferably at least 50 pounds per acre, and more preferably at rates of between 100-250 pounds per acre. The application mechanism may involve two or more sequential applications at different stages of plant development wherein the sum total of sugar applied or cumulative rate of application exceeds at least 25 pounds of sugar per acre, more preferably at least 50 pounds per acre and more preferably at rates of between 100-250 pounds per acre.

A sugar composition may be applied to a field prior to planting at a rate of at least 25 pounds of sugar per acre, more preferably at least 50 pounds per acre, and more preferably at rates of between 100-250 pounds per acre. The sugar composition can include one or more monosaccharides, and/or disaccharides and/or polysaccharides. Representative monosaccharides can include, for example, dextrose, fructose, glucose and galactose. Representative disaccharides can include sucrose, lactose, trehalose and maltose. Representative polysaccharides can include, for example, amylase, amylopectin, glycogen, cellulose and glycosaminoglycans. In one preferred example, sucrose can be applied in the form of granulated sucrose (GS), for example, granulated white sugar or "table sugar", and broadcast spread at a rate of at least 25 pounds of sugar per acre, more preferably at least 50 pounds per acre, and more preferably at rates of between 100-250 pounds per acre. Depending on the source of the monosaccharide, and/or disaccharide and/or polysaccharide compound, application of the sugar can involve broadcast spreading or can involve spraying a liquid, for example, high-fructose corn syrup, wherein the liquid application rate is selected so as to apply the monosaccharide, and/or disaccharide and/or polysaccharide component at a rate of at least 25 pounds of sugar per acre, more preferably at least 50 pounds per acre, and more preferably at rates of between 100-250 pounds per acre. Selection of the appropriate monosaccharide, and/or disaccharide and/or polysaccharide can involve various factors including availability, pricing, availability of suitable application equipment, soil conditions, environmental / geographical / topographical / meteorological conditions and the like. Furthermore, it may be beneficial to apply a combination of different monosaccharides, and/or disaccharides and/or polysaccharides for particular soil conditions or plant types, where said combination results in a combined pre-planting application at a rate of at least 25 pounds of sugar per acre, more preferably at least 50 pounds per acre, and more preferably at rates of between 100-250 pounds per acre. One or more active ingredients can be applied simultaneously with, or sequentially to, the sugars to further stimulate soil conditions. The one or more active ingredients can be separate from or chemically or physically coupled to the sugars. In some examples, one or more additional applications of sugars can be provided at a post-emergent stage.

In another example, the method is directed to enhancing sugarbeet yield by adding GS at a rate of at least 25 pounds of GS per acre, more preferably at least 50 pounds per acre, and more preferably at rates of between 100-250 pounds per acre or more, prior to planting. By applying GS at a rate of at least 25 pounds of GS per acre, more preferably at least 50 pounds per acre, and more preferably at rates of between 100-250 pounds per acre, prior to planting. yields can increase by at least 10% (as measured in pounds of sugar per acre) over sugarbeets that experience similar planting and growing conditions but lacking GS application. GS can be applied to a sugarbeet field in two or more sequential applications at different stages of sugarbeet development wherein the sum total of sugar applied or cumulative rate of application exceeds at least 25 pounds of sugar per acre, more preferably at least 50 pounds per acre, more preferably at rates of between 100-250 pounds per acre.

In another example, the method is directed to enhancing soybean yield by adding GS at a rate of at least 25 pounds of GS per acre, more preferably at least 50 pounds per acre, and more preferably at rates of between 100-250 pounds per acre, prior to planting. By applying GS at a rate of at least 25 pounds of GS per acre, more preferably at least 50 pounds per acre, and more preferably at rates of between 100-250 pounds per acre, prior to planting. yields can increase by at least 10% (as measured in bushels of soybeans per acre) over soybeans that experience similar planting and growing conditions but lacking GS application. GS can be applied to a soybean field in two or more sequential applications at different stages of soybean development wherein the sum total of sugar applied or cumulative rate of application exceeds at least 25 pounds of sugar per acre, more preferably at least 50 pounds per acre, more preferably at rates of between 100-250 pounds per acre.

In yet another example, the method is directed to applying sugars, including monosaccharides, and/or disaccharides and/or polysaccharides to fields prior to planting to increase crop yields. The method can comprise the application of GS at rates of at least 25 pounds of GS per acre, more preferably at least 50 pounds per acre, and more preferably at rates of between 100-250 pounds per acre. Crops that experience crop yield improvement through the pre-planting application of sugars can include, for example, sugarbeets, soybeans, corn, wheat, canola, winter oilseed rape, hay land, pasture land, cotton, sorghum, sugarcane, tobacco, potatoes, tomatoes, onions, melons, beans, gourds, fruits, nuts, vines and the like.

In yet another example, the method is directed to in-furrow application of sugars, including monosaccharides, and/or disaccharides and/or polysaccharides at a time of seed planting to increase crop yields. The method can comprise the in-furrow application of sucrose, in either solid or liquid form, at rates of at least 25 pounds of GS per acre, more preferably at least 50 pounds per acre, and more preferably at rates of between 100-250 pounds per acre In-furrow application of sugars can be done in conjunction and/or simultaneously with in-furrow application of conventional fertilizer, for example, liquid ammonium phosphate commonly referred to as "10-34-0". The sugars and fertilizer can be mixed so as to comprise a liquid or solid composition for simultaneous application using conventional spreading or spraying implements. The sugars and fertilizer can be provided as a mixture, for example, a solid particulate or mixture of particles, or alternatively, a liquid mixture such that no additional mixing is required at a point of use. Crops that experience crop yield improvement through the pre-planting application of sugars can include, for example, sugarbeets, soybeans, corn, wheat, canola, winter oilseed rape, hay land, pasture land, cotton, sorghum, sugarcane, tobacco, potatoes, tomatoes, onions, melons, beans, gourds, fruits, nuts, vines and the like.

In still another example, the method can comprise a crop yield improvement agent for in-furrow application to enhance crop yields. The crop yield improvement agent can comprise a combination of a sugar and a fertilizer, in either a liquid or solid form, for in-furrow application using conventional spreader and sprayer implements. The sugar can comprise monosaccharides, and/or disaccharides and/or polysaccharides. In one preferred example, the sugar can comprise sucrose, in either liquid or solid form, wherein the combination is applied at rates of at least 25 pounds of sucrose per acre, more preferably at least 50 pounds per acre, and more preferably at rates of between 100-250 pounds per acre. The fertilizer can comprise any of a variety of conventional fertilizers and fertilizer blends including, for example, liquid ammonium phosphate commonly referred to as "10-34-0". The crop yield improvement agent can be provided in a solid particulate form comprising a mixture of discrete sugar and fertilizer particulates or alternatively, the sugar and fertilizer can comprise a combined particulate. Alternatively, the crop yield improvement agent can comprise a liquid mixture of sugar and fertilizer.

In one embodiment, the present invention can comprise a method of enhancing pre-emergent soil conditions to enhance crop yield. The method may comprise the in-furrow application of a crop yield improvement agent at a time of seed planting, wherein the crop yield improvement agent can comprise a combination of a sugar and a fertilizer, in either a liquid or solid form. In some embodiments, the crop yield improvement agent can comprise a solid form, wherein in-furrow application of the solid crop yield improvement agent is performed simultaneously with or at time of seed planting/sewing. Alternatively, the crop yield improvement agent can comprise a liquid form, wherein in-furrow application of the liquid crop yield improvement agent is performed simultaneously with or a time seed planting/sewing. The crop yield improvement agent can comprise sugar in the forms of monosaccharides, and/or disaccharides and/or polysaccharides. In one preferred embodiments, the sugar can comprise sucrose, in either liquid or solid form, wherein the crop yield improvement agent is applied at rates of at least 25 pounds of sucrose per acre, more preferably at least 50 pounds per acre, and more preferably at rates of between 100-250 pounds per acre. The fertilizer can comprise any of a variety of conventional fertilizers including, for example, liquid ammonium phosphate commonly referred to as "10-34-0". In one embodiment, the enhanced pre-emergent soil conditions can be represented by enhanced levels of respiration, said enhanced levels capable of being quantified by a conventional CO2 Burst test.

Throughout the present disclosure, the term "sugar" is used with reference to a class of short-chain carbohydrates that are often used as sweeteners in food. As used throughout the application, sugar is intended to include: monosaccharides such as, for example, dextrose, glucose, fructose and galactose; disaccharides such as, for example, sucrose, trehalose, lactose and maltose; and polysaccharides such as, for example, amylase, amylopectin, glycogen, cellulose and glycosaminoglycans.

Throughout the present disclosure, various rates of sugar application are disclosed in units of pounds of sugar per acre. As some of the sugars are used and/or commonly available in either a concentrated or liquid form, these pound per acre application rates are intended to represent dry weight equivalents to conventional raw or refined granulated sucrose.

Throughout the present disclosure, the term fertilizer is used to reference natural or synthetic sources of plant nutrients that serve to enhance plant growth. Fertilizers can represent conventional or custom blends of macronutrients including Nitrogen, Phosphorous and Potassium. Within North America, some common fertilizers include variations of ammonium phosphate, NPK fertilizers, (Nitrogen, Phosphorous, Potassium) and ammonium nitrate. It is recognized that the ratio of macronutrients will vary based upon geographic location, soil type, crop rotation schedules and localized soil conditions. In addition, fertilizers can include secondary macronutrients and micronutrients as are used in conventional fertilizer products.

The above summary of the various representative embodiments of the invention is not intended to describe each illustrated embodiment or every implementation of the invention. Rather, the embodiments are chosen and described so that others skilled in the art can appreciate and understand the principles and practices of the invention. The figures in the detailed description that follow more particularly exemplify these embodiments.

### BRIEF DESCRIPTION OF THE FIGURES

The invention can be completely understood in consideration of the following detailed description of various embodiments of the invention in connection with the accompanying drawings, in which:
Figure 1 is a bar chart illustrating sugarbeet tonnage per acre for various treatments.
Figure 2 is a bar chart illustrating sugarbeet sugar per ton for the treatments reflected in Figure 1.
Figure 3 is a bar chart illustrating sugarbeet recoverable sugar per acre for the treatments reflected in Figure 1.
Figure 4 is bar chart illustrating soybean bushels per acre for various treatments.
Figure 5 is a bar chart illustrating soybean protein dry basis for the treatments reflected in Figure 4.
Figure 6 is a bar chart illustrating soybean oil dry basis for the treatments reflected in Figure 4.
Figure 7 is a photograph showing a side by side comparison of soybeans planted in a field where GS was applied at a rate of 100 pounds/acre prior to planting and soybeans planted in a field with no application of GS, wherein the soybeans are 40 days after planting.
Figure 8 is a photograph showing a side by side comparison of soybeans planted in a field where GS was applied at a rate of 100 pounds/acre prior to planting and soybeans planted in a field with no application of GS, wherein the soybeans are 40 days after planting.
Figure 9 is a photograph showing a side by side comparison of soybeans planted in a field where GS was applied at a rate of 100 pounds/acre prior to planting and soybeans planted in a field with no application of GS, wherein the soybeans are 60 days after planting.
Figure 10 is a bar chart illustrating recoverable sugar for various treatments in Foxhome, Minnesota.
Figure 11 is a bar chart illustrating recoverable sugar for various treatments in Hickson, North Dakota.
Figure 12 is a bar chart illustrating soybean yield for various treatments in Foxhome, Minnesota.
Figure 13 is a bar chart illustrating soybean yield for various treatments in Hickson, North Dakota.
Figure 14 is a bar chart illustrating corn yield for various treatments in Foxhome, Minnesota.
Figure 15 is a bar chart illustrating corn yield for various treatments in Hickson, North Dakota.
Figure 16 is a bar chart illustrating wheat yield for various treatments in Foxhome, Minnesota.
Figure 17 is a bar chart illustrating wheat yield for various treatments in Hickson, North Dakota.

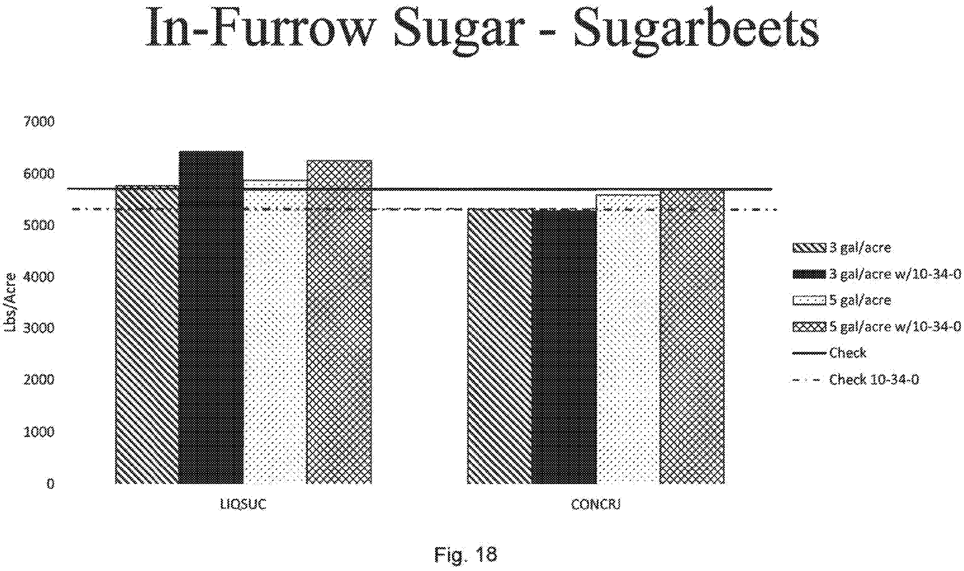

Figure 18 is a bar chart illustrating in-furrow Sugar and/or Fertilizer Application on Sugarbeet Yields in Foxhome, Minnesota.

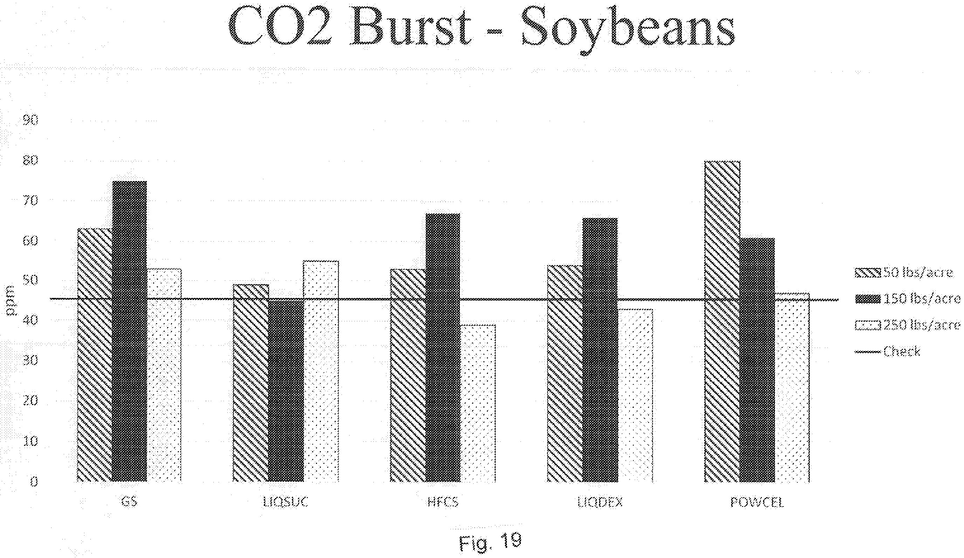

Figure 19 is a bar chart illustrating CO2 Burst Testing in Hickson, North Dakota.

While the invention is amenable to various modifications and alternative forms, specifics thereof have been shown by way of example in the drawings and will be described in detail. It should be understood, however, that the intention is not to limit the invention to the particular embodiments described. On the contrary, the intention is to cover all modifications, equivalents, and alternatives falling within the scope of the invention as defined by the appended claims.

### DETAILED DESCRIPTION OF THE FIGURES

Pre-planting (Pre) application of large amounts of sugars, including monosaccharides, and/or disaccharides and/or polysaccharides, provides a statistically noticeable improvement in crop yield. Generally, the large amounts at which the sugars are applied comprise an application rate of at least 25 pounds per acre, more preferably at least 50 pounds per acre, and more preferably at rates of between 100-250 pounds per acre. Application of the sugars can generally involve applying the sugars directly to the soil prior to, during and/or after planting. Depending on the form and/or type of the sugars applied, application can be accomplished via broadcast spreading for solids or via spraying for liquids. Regardless of the application mechanism or form of the sugars, the application rate comprises at least 25 pounds of sugar per acre, more preferably at least 50 pounds per acre, and more preferably at rates of between 100-250 pounds per acre. The application mechanism can involve two or more sequential applications at different stages of plant development wherein the sum total of sugar applied or cumulative rate of application exceeds at least 25 pounds of sugar per acre, more preferably at least 50 pounds per acre and more preferably at rates of between 100-250 pounds per acre.

The sugar composition can include one or more monosaccharides, and/or disaccharides and/or polysaccharides. Representative monosaccharides can include, for example, dextrose, glucose, fructose and galactose. Representative disaccharides can include sucrose, trehalose, lactose and maltose. Representative polysaccharides can include, for example, amylase, amylopectin, glycogen, cellulose and glycosaminoglycans. In one preferred example, sucrose can be applied in the form of GS that is broadcast spread at a rate of at least 25 pounds of GS per acre, more preferably at least 50 pounds per acre, and more preferably at rates of between 100-250 pounds per acre. Depending on the source of the monosaccharide, and/or disaccharide and/or polysaccharide compounds, application of the sugar can involve broadcast spreading or can involve spraying a liquid, for example, high-fructose corn syrup, wherein the liquid application rate is selected so as to apply the monosaccharide, and/or disaccharide and/or polysaccharide component at a rate of at least 25 pounds of sugar per acre, more preferably at least 50 pounds per acre, and more preferably at rates of between 100-250 pounds per acre. The application mechanism can involve two or more sequential applications at different stages of plant development wherein the sum total of monosaccharides, and/or disaccharides and/or polysaccharides applied or cumulative rate of application exceeds at least 25 pounds of monosaccharides, and/or disaccharides and/or polysaccharides per acre, more preferably at least 50 pounds per acre and more preferably at rates of between 100-250 pounds per acre.

Selection of the appropriate monosaccharide, and/or disaccharide and/or polysaccharide can involve various factors including availability, pricing, availability of suitable application equipment, soil conditions, environmental/geographical/topographical/meteorological conditions and the like. Furthermore, it may be beneficial to apply a combination of different monosaccharides, and/or disaccharides and/or polysaccharides for particular soil conditions or plant types, where said combination results in a combined pre-planting application at a rate of at least 25 pounds of sugar per acre, more preferably at least 50 pounds per acre, and more preferably at rates of between 100-250 pounds per acre. One or more active ingredients can be applied simultaneously with, or sequentially to, the sugars to further stimulate soil conditions. The one or more active ingredients can be separate from or chemically or physically coupled to the sugars. One or more additional applications of sugars can be provided at a post-emergent stage. Representative active ingredients can comprise, for example, fertilizers, pesticides, lime, potassium and the like.

Without wishing to be bound by theory, it is believed that the application of sugars enhances soil conditions by providing a readily consumable carbon-based energy source to typical microflora that are already present in the soil. By providing the energy source either prior to planting or at a time of planting/sewing, it is believed that the microflora are given an early energy boost allowing them to be in a beneficial, thriving condition at time of seed germination and at an early growth stage as opposed to being present in a low activity, survival-mode as is typical following a prior planting season or winter. In this way, the seeds and subsequent crop plants are immediately exposed to the most beneficial soil conditions at the earliest possible stage. Furthermore, the sugars are easily broken down and consumed by the microflora such that the potential for residual, negative effects in subsequent growing seasons is unlikely.

As it is believed that the beneficial results of the application of sugars are primarily a result of an improvement in microflora activity within the soil, it is expected that similar yield improvements will be found in a variety of other crops in addition to the previously discussed sugarbeets and soybeans. For example, it is expected that one or both of a pre-planting or in-furrow application of sugars will improve yields for sugarbeets, soybeans, corn, wheat, canola, winter oilseed rape, hay land, pasture land, cotton, sorghum, sugarcane, tobacco, potatoes, tomatoes, onions, melons, beans, gourds, fruits, nuts, vines and the like.

As the yield improvement mechanism associated with the application of sugars is believed to result from an improvement in microflora activity due to the presence of a readily consumable carbon-based energy source, it is further believed that the application of other sugars would see similar yield improvement. For example, GS generally comprises the disaccharide sucrose. In addition to sucrose, it is believed that similar results can be expected with monosaccharides such as dextrose, glucose, fructose and galactose; disaccharides such as lactose, trehalose and maltose; and/or polysaccharides such as amylase, amylopectin, glycogen, cellulose and glycosaminoglycans. Depending on the source of the monosaccharide, and/or disaccharide and/or polysaccharide compound, pre-planting application may involve broadcast spreading or may involve spraying of a liquid, for example, high-fructose corn syrup, liquid sucrose or other liquid formulations of sugar, wherein the liquid application rate is selected so as to apply the monosaccharide, and/or disaccharide and/or polysaccharide component at a rate of at least at least 25 pounds of sugar per acre, more preferably at least 50 pounds per acre and more preferably at rates of between 100-250 pounds per acre Selection of the appropriate monosaccharide, and/or disaccharide and/or polysaccharide can involve various factors including availability, pricing, availability of suitable application equipment, soil conditions, environmental/geographical/topographical/meteorological conditions and the like. Furthermore, it may be beneficial to apply a combination of different monosaccharides, and/or disaccharides and/or polysaccharides for particular soil conditions or plant types, where said combination results in a combined pre-planting application of at least 25 pounds of sugar per acre, more preferably at least 50 pounds per acre and more preferably at rates of between 100-250 pounds per acre of the combination.

In addition to providing an energy source to microflora, it may be beneficial to provide additional active ingredients at the pre-planting stage to further enhance and/or stimulate the microflora activity. These additional active ingredients can include, for example, fertilizers, pesticides, lime, potassium and the like. In some embodiments, these active ingredients may be physically or chemically adhered to the monosaccharides and/or disaccharides, while in other, embodiments, they may be mixed together for simultaneous application or applied in an individual, sequential fashion. Regardless of whether the active ingredients are combined with or treated as being separate from the monosaccharides, and/or disaccharides and/or polysaccharides, the application rate of the monosaccharides, and/or disaccharides and/or polysaccharides should be at least 25 pounds of sugar per acre, more preferably at least 50 pounds per acre and more preferably at rates of between 100-250 pounds per acre

To demonstrate the yield enhancement benefits of applying large amounts of sugars to fields, field trials were conducted for both sugarbeets and soybeans as described below. In each of the field trials, the sugar comprised sucrose that was broadcast spread in the form of GS. Descriptions of the testing and the accompanying results are as follows:

### Sugarbeet Testing

To test the efficacy of using a sugar based fertilizer composition with sugarbeets, a field trial using Crystal® brand ACH 228 sugarbeet seed was conducted in Wilkin County, Minnesota. A total of eleven (11) treatments were conducted. Each treatment was replicated four times arranged in a Randomized Complete Block (RCB) Design in the same field. Each replication consisted of a plot having a width of six (6) rows with twenty two (22) inch row spacing having a row length of twenty five (25) feet. To reduce/eliminate any treatment impacts between adjacent plots, only the four (4) interior rows of each plot were treated and evaluated. With the exception of the treatment program applied to the individual plots, which will be discussed below, conventional commercial growing practices were otherwise followed during the field trials. The individual plots experienced the same growing conditions throughout the season.

The treatment regimen for the sugarbeets included one (1) untreated treatment in which no sugar was applied was used as the control element. One (1) treatment included Sun Energy Foliar Fertilizer (SE) available from Micro Nutrients Online. Ten (10) treatments were conducted using GS. SE is available in liquid form and was applied by spraying while GS was supplied in a conventional solid form and applied via broadcast spreading. SE is for foliar application and was applied according to the labeling instructions on post-emergent (Post) sugarbeet plants at the both the 4-Leaf and 8-Leaf stages. GS was applied at a variety of times, both pre-planting (Pre) and on post-emergent sugarbeet plants (Post) at either or both of the 4-Leaf and 8-Leaf stages. When applied during pre-planting (Pre), the GS was spread directly on the soil before spring tillage, lightly worked into the ground and followed by planting of the sugarbeet seed into the treated ground. A summary of the plot treatments are contained in Table 1 below:

**Table 1: Sugarbeet Trial Treatment Summary**

| Replication | Treatment | Plant Stage | Application | Rate |
|---|---|---|---|---|
| 1 | Untreated | N/A | N/A | N/A |
| 2 | SE | 4-Leaf + 8 Leaf | Post | 26 ounces/Acre 4-Leaf |
| | | | | 26 ounces /Acre 8-Leaf |
| 3 | GS | Pre | Pre | 50 pounds/Acre |
| 4 | GS | Pre | Pre | 100 pounds/Acre |
| 5 | GS | 4-Leaf | Post | 3 pounds/Acre |
| 6 | GS | 8-Leaf | Post | 3 pounds/Acre |
| 7 | GS | 4-Leaf | Post | 5 pounds/Acre |
| 8 | GS | 4-Leaf + 8-Leaf | Post | 3 pounds/Acre 4-Leaf |
| | | | | 3 pounds/Acre 8-Leaf |
| 9 | GS | 4-Leaf + 8-Leaf | Post | 5 pounds/Acre 4-Leaf |
| | | | | 5 pounds/Acre 8-Leaf |
| 10 | GS | Pre + 8-Leaf | Pre + Post | 50 pounds/Acre Pre |
| | | | | 3 pounds/Acre 8-Leaf |
| 11 | GS | Pre + 8-Leaf | Pre + Post | 100 pounds/Acre Pre |
| | | | | 5 pounds/Acre 8-Leaf |

Following a conventional growing season, the middle four rows of each plot were harvested and data collected for overall yield (tons of sugarbeets/Acre), sugar per ton (pounds of recoverable sugar/ton of sugarbeets) and sugar per Acre (pounds of recoverable sugar/Acre). Fisher's Exact LSD was the statistical test of choice for mean separation for the individual plots of each treatment. A summary of the sugarbeet harvest data is contained in Table 2 below:

**Table 2: Sugarbeet Harvest Data**

| Replicat ion | Tons of Sugarbeets / Acre | Pounds of Recoverable Sugar / Ton of Sugarbeets | Pounds of Recoverable Sugar / Acre |
|---|---|---|---|
| 1 | 24.67 | 281.74 | 6951.04 |
| 2 | 21.42 | 281.80 | 5988.57 |
| 3 | 26.94 | 282.03 | 7598.95 |
| 4 | 28.91 | 278.54 | 8051.44 |
| 5 | 25.41 | 276.83 | 7021.89 |
| 6 | 25.64 | 284.34 | 7279.72 |
| 7 | 24.43 | 274.69 | 6712.87 |
| 8 | 22.81 | 270.05 | 6125.93 |
| 9 | 24.00 | 289.83 | 6957.73 |
| 10 | 26.24 | 276.34 | 7250.53 |
| 11 | 29.03 | 274.29 | 7963.70 |

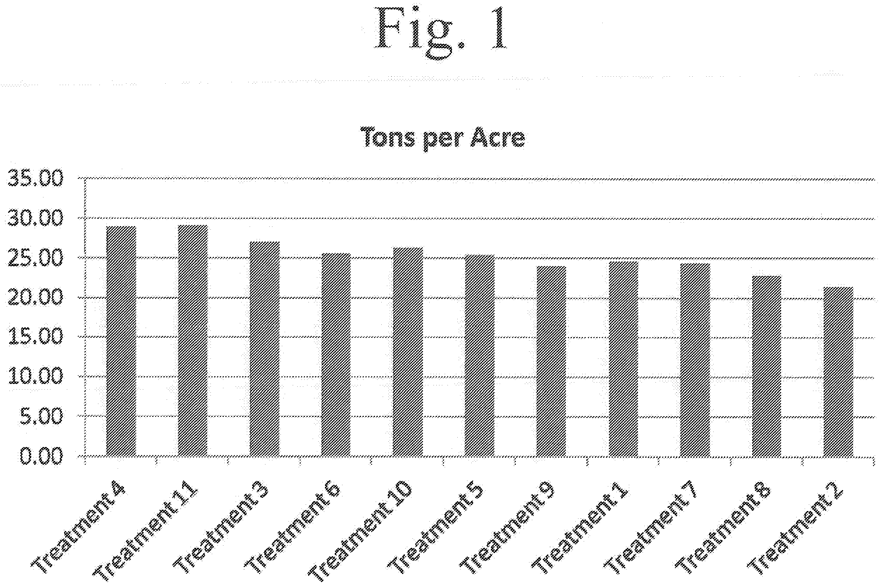

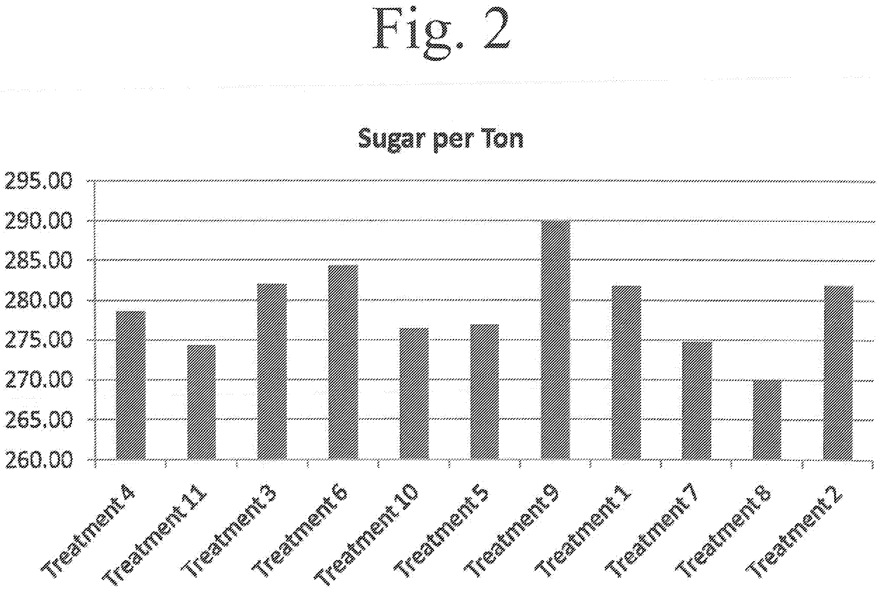

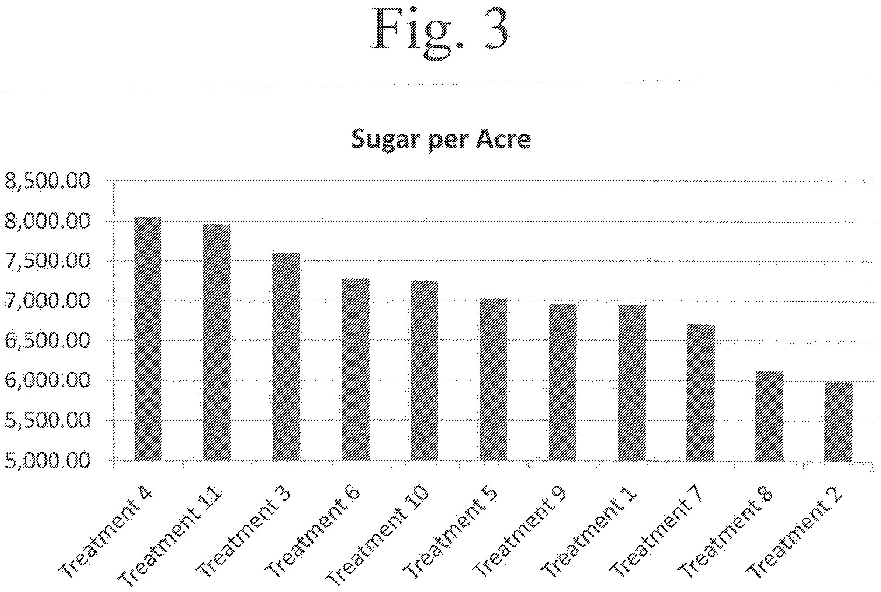

In reviewing the yield data as summarized in Table 3 below as well as the graphs contained in Figures 1-3, it was found that every pre-planting (Pre) application of GS resulted in a yield increase as compared to the untreated check treatment and the Sun Energy (SE) treatments. Furthermore, the treatments in which the largest amounts of GS were applied in a pre-planting application had the two largest yield increases as well as four of the top five largest yield increases. While the data involving only post-emergent application of GS at either a 4-Leaf or 8-Leaf stage was inconclusive, every pre-planting application of GS showed significant yield increases, at least a 4% increase, in comparison to the untreated check treatments and at the largest pre-planting applications of GS, at least a 14% yield increase as compared to the untreated check treatment.

**Table 3: Sugarbeet Yields**

| Replic ation | Recoverable Pounds of Sugar/Acre | Check Pounds of Sugar/Acre | Yield Increase |
|---|---|---|---|
| 4 | 8051.44 | 6951.04 | 15.83% |
| 11 | 7963.70 | 6951.04 | 14.57% |
| 3 | 7598.95 | 6951.04 | 9.32% |
| 6 | 7279.72 | 6951.04 | 4.73% |
| 10 | 7250.53 | 6951.04 | 4.31% |
| 5 | 7021.89 | 6951.04 | 1.02% |
| 9 | 6957.73 | 6951.04 | 0.10% |
| 1 | 6951.04 | 6951.04 | N/A |
| 7 | 6712.87 | 6951.04 | -3.43% |
| 8 | 6125.93 | 6951.04 | -11.87% |
| 2 | 5988.57 | 6951.04 | -13.85% |

### Soybean Testing

To test the efficacy of using a sugar based fertilizer composition with soybeans, field trials using Northrup-King NKS06-H5 soybean seed were conducted in Wilkin County, Minnesota. A total of six (6) treatments were conducted. Each treatment was replicated four times arranged in a Randomized Complete Block (RCB) Design in the same field. Each replication consisted of a plot having a width of six (6) rows with twenty two (22) inch row spacing having a row length of twenty five (25) feet. To reduce/eliminate any treatment impacts between adjacent plots, only the four (4) interior rows of each plot were treated and evaluated. With the exception of the treatment program applied to the individual plots, which will be discussed below, conventional commercial growing practices were otherwise followed during the field trials. The individual plots experienced the same growing conditions throughout the season.

The treatment regimen for the soybeans included one (1) untreated treatment in which no sugar was applied and was used as the control element. One (1) treatment included treatment with Sun Energy Foliar Fertilizer (SE). Four (4) treatments were conducted using granulated sucrose (GS). SE was supplied in liquid form and applied by spraying while GS was supplied in a conventional solid form and applied via broadcast spreading. SE is for foliar application and was applied according to the labeling instructions on post-emergent (Post) soybean plants at both the Vegetative Fourth Trifoliolate (V4) and Reproductive Beginning Flowering (R1) stages. GS was applied at a variety of times, both pre-planting (Pre) and on post-emergent (Post) soybean plants at either or the V4 or R1 stages. When applied during pre-planting (Pre), the GS was spread directly on the soil before spring tillage, lightly worked into the ground and followed by planting of the soybean seed into the treated ground. A summary of the plot treatments is contained in Table 4 below:

**Table 4: Soybean Trial Treatment Summary**

| Replication | Treatment | Plant Stage | Application | Rate |
|---|---|---|---|---|
| 1 | Untreated | N/A | N/A | N/A |
| 2 | SE | V4 + R1 | Post | 26 ounces/Acre Post (V4) |
| | | | | 26 ounces/Acre Post (R1) |
| 3 | GS | --- + V4 | Pre + Post | 100 pounds/Acre Pre |
| | | | | 3 pounds/Acre Post (V4) |
| 4 | GS | R1 | Post | 3 pounds/Acre |
| 5 | GS | R1 | Post | 5 pounds/Acre |
| 6 | GS | --- + V4 | Pre + Post | 100 pounds/Acre Pre |
| | | | | 5 pounds/Acre Post (V4) |

Following a conventional growing season, the middle four rows of each plot were harvested and data collected for overall yield (bushels of soybeans/Acre), protein dry basis (%) and oil dry basis (%). Fisher's Exact LSD was the statistical test of choice for mean separation for the individual plots of each treatment. A summary of the soybean harvest data is contained in Table 5 below:

**Table 5: Soybean Harvest Data**

| Replicat ion | Bushels of Soybeans / Acre | Protein Dry Basis (%) | Oil Dry Basis (%) |
|---|---|---|---|
| 1 | 40.14 | 36.78 | 21.25 |
| 2 | 31.81 | 35.48 | 21.52 |
| 3 | 52.92 | 36.04 | 21.76 |
| 4 | 35.56 | 35.15 | 22.12 |
| 5 | 40.14 | 35.82 | 21.50 |
| 6 | 45.28 | 36.10 | 21.60 |

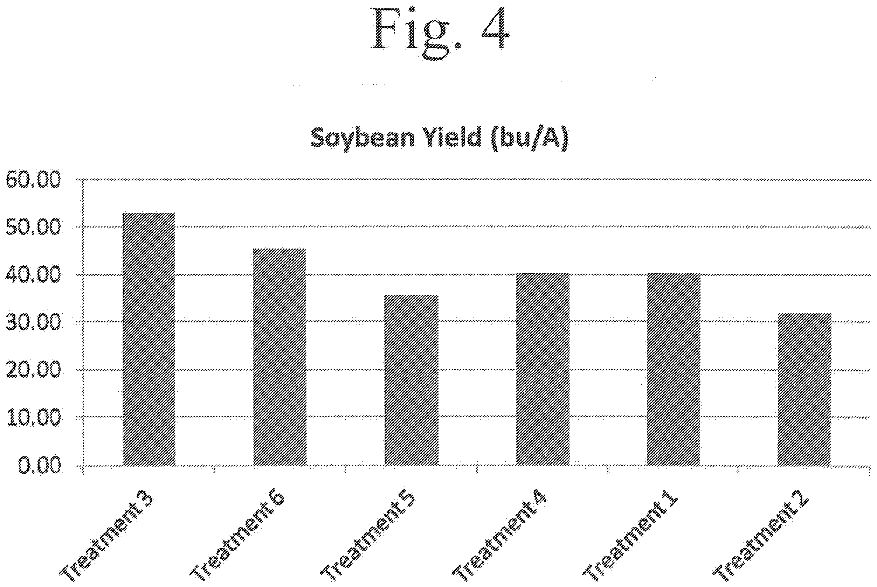

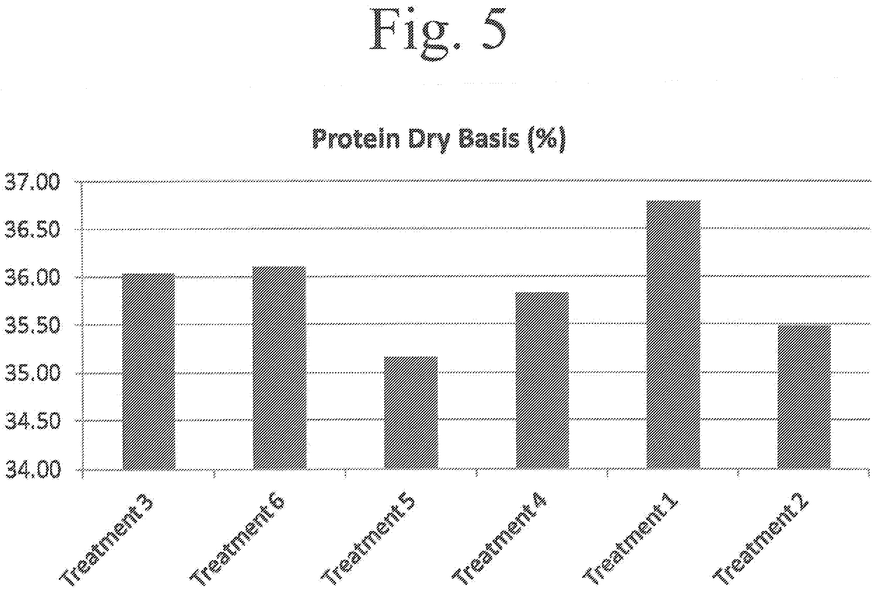

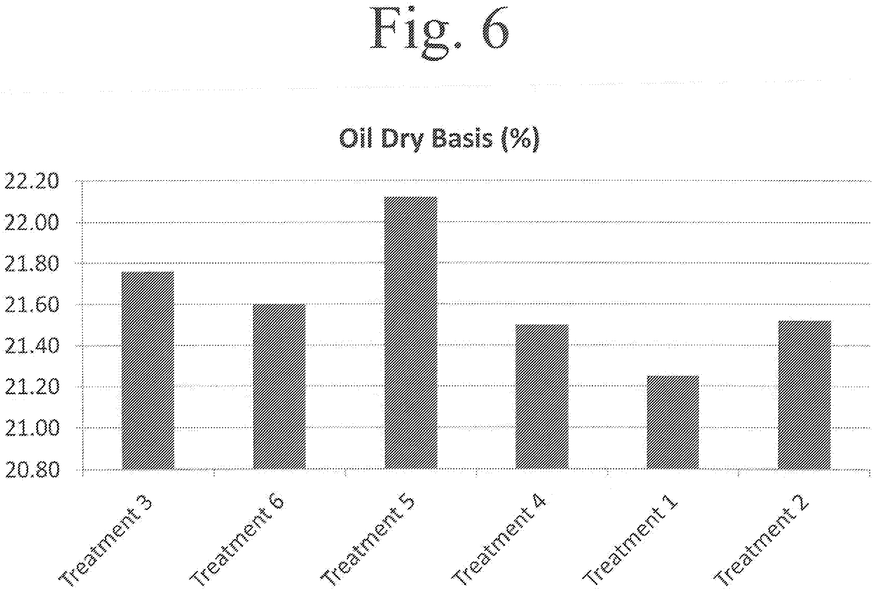

In reviewing the yield data as summarized in Table 6 below as well as the graphs contained in Figures 4-6, it was found that every pre-planting (Pre) application of GS resulted in a yield increase of at least 12.8% as compared to the untreated check treatment, the Sun Energy (SE) treatment and the treatments in which GS was only applied to post-emergent (Post) plants. The data involving only post-emergent application of GS was inconclusive.

**Table 6: Soybean Yields**

| Replic ation | Bushels of Soybeans/Acre | Check Bushels of Soybean/Acre | Yield Increase (Treatment Bushels of Soybeans/Acre) / (Check Bushels of Soybeans/Acre) |
|---|---|---|---|
| 3 | 52.92 | 40.14 | 31.84% |
| 6 | 45.28 | 40.14 | 12.81% |
| 5 | 40.14 | 40.14 | 0.00% |
| 1 | 40.14 | 40.14 | 0.00% |
| 4 | 35.56 | 40.14 | -11.41% |
| 2 | 31.81 | 40.14 | -20.75% |

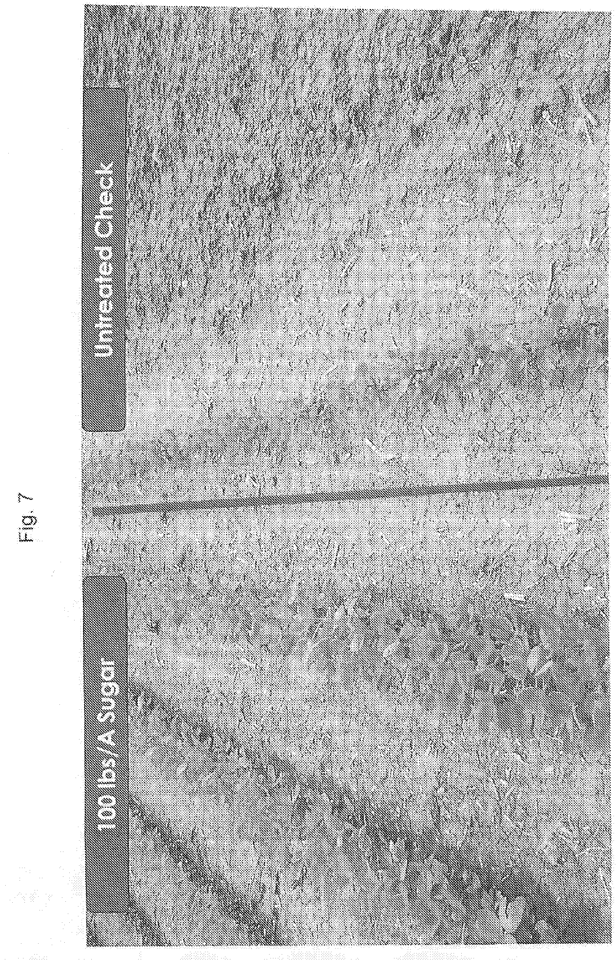

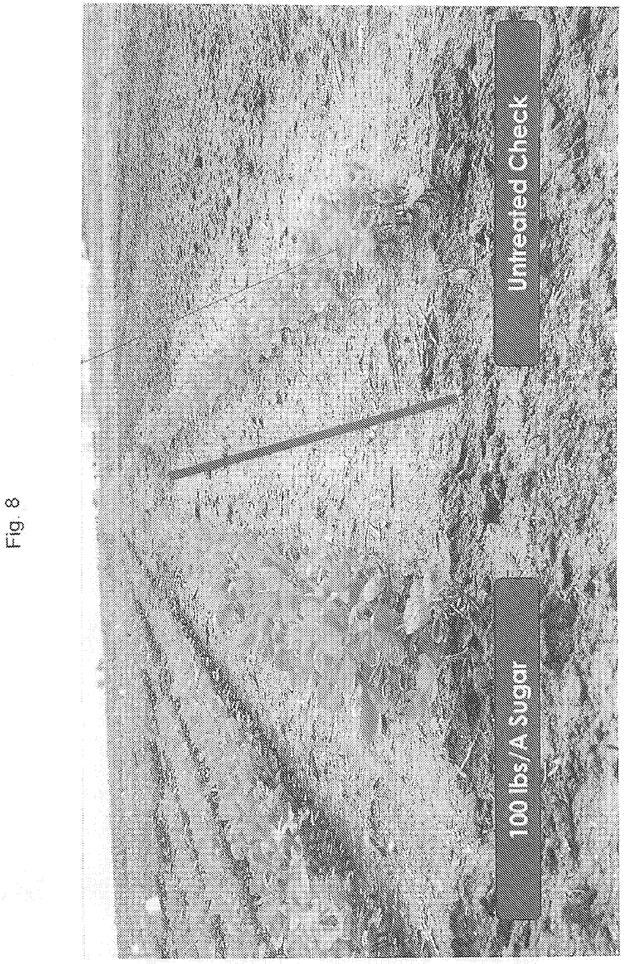

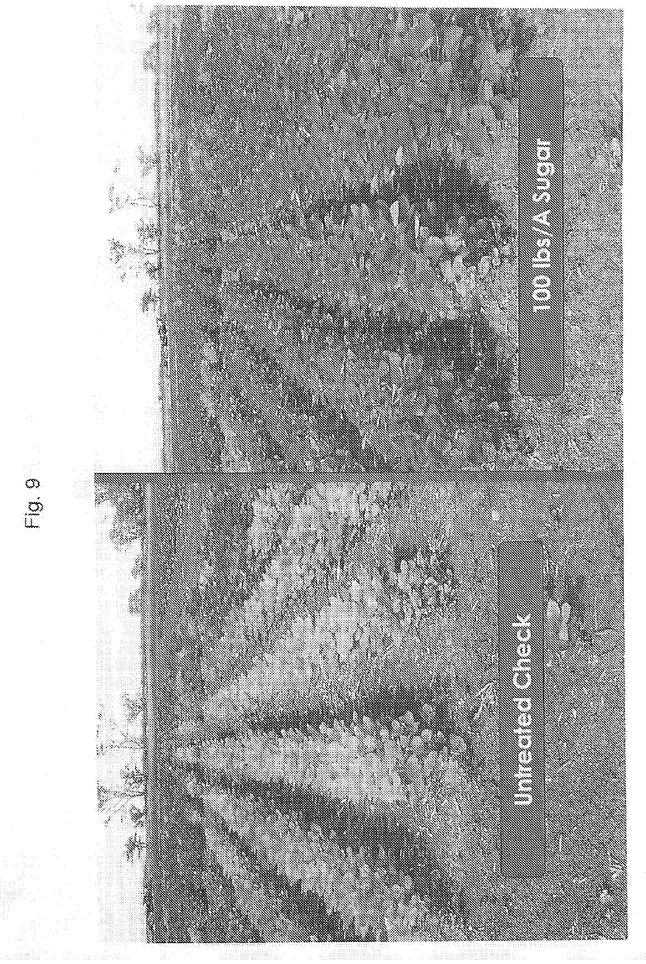

In addition to collecting the harvest data for soybeans, the fact that soybean growth is observable above ground, as opposed to sugarbeets where growth occurs below the ground, allows for visual comparison of the various soybean treatments and their related growth and appearance throughout the growing season. These visual observations correlate well with the measured harvest data in that side-by-side visual comparison of the soybean plants clearly demonstrate that the pre-planting (Pre) application of GS resulted in larger more robust soybean plants as compared to untreated, check plants as seen in Figures 7-9. These plants depicted in each Figure otherwise experienced the same growing conditions with the only difference being the GS treatment protocol.

Pre-planting (Pre) application of GS provides a marked improvement in yield for both sugarbeets (as measured in pounds of recoverable sugar per acre) and soybeans (as measured in bushels of soybeans per acre) as compared to sugarbeets and soybeans that received either no treatment (untreated check treatments) or received a post-emergent foliar application (Sun Energy). Furthermore, the data demonstrates that pre-planting applications of greater than 50 pounds per acre of GS, and more preferably, at least 100 pounds per acre of GS, provide substantial yield improvements for sugarbeets and soybeans.

Following a determination that a pre-planting (Pre) application of GS showed yield improvement for both sugarbeats and soybeans, additional field trials were conducted for sugarbeets, soybeans, corn and wheat to investigate the impact of pre-planting application rate and sugar source (monosaccharide, disaccharide, polysaccharide) on each of the crops. The field trials were conducted simultaneously in two different planting locations for each of the crops. One location was near the community of Foxhome in Wilkin County, Minnesota (hereafter referred to as "Foxhome") while the second location was near the community of Hickson in Cass County, North Dakota (hereafter referred to as "Hickson"). The Foxhome and Hickson locations are on opposite sides of the Red River along the border of Minnesota and North Dakota and separated by a distance exceeding 40 miles. Generally, the Foxhome location has heavier clay loam soil conditions while Hickson has sandy loam soil conditions.

At each of the Foxhome and Hickson locations, a total of thirty two (32) treatments were conducted for each crop (sugarbeets, soybeans, corn, wheat). Each treatment was replicated four times arranged in a Randomized Complete Block (RCB) Design in the same field. Each replication consisted of a plot measuring twenty five (25) feet in length and eleven (11) feet in width. In selecting the particular seed types for evaluation, popular commercial varieties to the region were utilized. For the row crops (sugarbeets, soybeans, corn) each replication included a width of six (6) rows with twenty two (22) inch row spacing and having a row length of twenty five (25) feet. The wheat was planted in accordance with standard commercial practices. To reduce/eliminate any treatment impacts between adjacent plots for the crops, only the four (4) interior rows of each plot were treated and evaluated for row crops, while for wheat, only the interior 7.33 feet of each plot were treated and evaluated. With the exception of the treatment program applied to the individual plots, which will be discussed below, conventional commercial growing practices for each planting location were otherwise followed during the field trials. While the individual plots at the same location, Hickson or Foxhome, experienced essentially the same growing conditions throughout the season, there were various differences associated with localized precipitation, general growing conditions, soil classification and the like, which contributed to performance differences between the Hickson and Foxhome locations.

The treatment regimen at each location for each of the tested crops included two (2) untreated treatments (Treatments 31 and 32) in which no sugar was applied and constitute the control elements. Six (6) treatments (Treatments 1-6) included the application of granulated sucrose (GS) at varying rates. Six (6) treatments (Treatments 7-12) included the application of liquid sucrose (hereafter "LIQSUC") at varying rates. Six (6) treatments (Treatments 13-18) included the liquid application of high fructose corn syrup (hereafter "HFCS") at varying rates. Six treatments (Treatments 19-24) included the liquid application of dextrose (hereafter "LIQDEX") at varying rates. Six (6) treatments (Treatments 25-30) included the application of powdered cellulose (hereafter "POWCEL") at varying rates. For the sugar applied in a solid form, granulated or powdered, field application was conducted via conventional broadcast spreading. For the sugar applied in a liquid form, a liquid concentrate was mixed and diluted with water in a tank and a conventional sprayer was configured such that the liquid was sprayed so as to have the same sugar equivalent (measured in pounds/per acre) as the sugar in solid form. Regardless of whether the sugar was applied as a solid or liquid, the sugar was applied directly onto the soil before spring tillage, lightly worked into the ground and followed by planting of the crop seed in the treated ground. A summary of application rates for each plot treatments are contained in Table 7 below and were used consistently with each of the crops (sugarbeets, soybeans, corn, wheat).

**Table 7: Summary of Sugar Application Treatments for Foxhome and Hickson**

| Replication | Treatment | Sugar Form | Application Method | Rate - Dry Weight Equivalent of Granulated sucrose |
|---|---|---|---|---|
| 1 | GS | Solid | Spread | 25pounds/ Acre |
| 2 | GS | Solid | Spread | 50 pounds/Acre |
| 3 | GS | Solid | Spread | 100 pounds/Acre |
| 4 | GS | Solid | Spread | 150 pounds/Acre |
| 5 | GS | Solid | Spread | 200 pounds/Acre |
| 6 | GS | Solid | Spread | 250 pounds/Acre |
| 7 | LIQSUC | Liquid | Spray | 25pounds/Acre |
| 8 | LIQSUC | Liquid | Spray | 50 pounds/Acre |
| 9 | LIQSUC | Liquid | Spray | 100 pounds/Acre |
| 10 | LIQSUC | Liquid | Spray | 150 pounds/Acre |
| 11 | LIQSUC | Liquid | Spray | 200 pounds/Acre |
| 12 | LIQSUC | Liquid | Spray | 250 pounds/Acre |
| 13 | HFCS | Liquid | Spray | 25pounds/Acre |
| 14 | HFCS | Liquid | Spray | 50 pounds/Acre |
| 15 | HFCS | Liquid | Spray | 100 pounds/Acre |
| 16 | HFCS | Liquid | Spray | 150 pounds/Acre |
| 17 | HFCS | Liquid | Spray | 200 pounds/Acre |
| 18 | HFCS | Liquid | Spray | 250 pounds/Acre |
| 19 | LIQDEX | Liquid | Spray | 25pounds/Acre |
| 20 | LIQDEX | Liquid | Spray | 50 pounds/Acre |
| 21 | LIQDEX | Liquid | Spray | 100 pounds/Acre |
| 22 | LIQDEX | Liquid | Spray | 150 pounds/Acre |
| 23 | LIQDEX | Liquid | Spray | 200 pounds/Acre |
| 24 | LIQDEX | Liquid | Spray | 250 pounds/Acre |
| 25 | POWCEL | Solid | Spread | 25pounds/Acre |
| 26 | POWCEL | Solid | Spread | 50 pounds/Acre |
| 27 | POWCEL | Solid | Spread | 100 pounds/Acre |
| 28 | POWCEL | Solid | Spread | 150 pounds/Acre |
| 29 | POWCEL | Solid | Spread | 200 pounds/Acre |
| 30 | POWCEL | Solid | Spread | 250 pounds/Acre |
| 31 | Untreated-Check | N/A | N/A | N/A |
| 32 | Untreated-Check | N/A | N/A | N/A |

### Sugarbeet Testing at Foxhome and Hickson

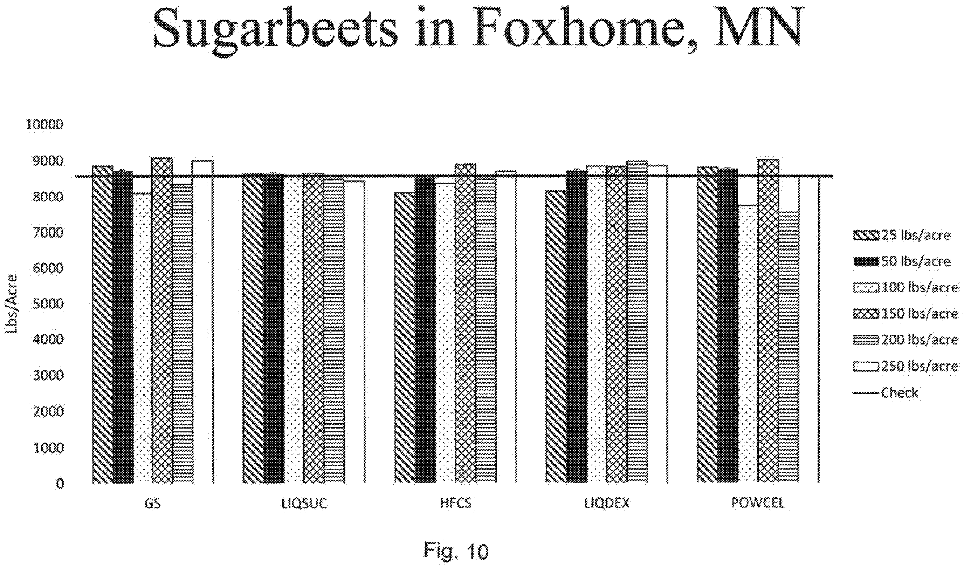

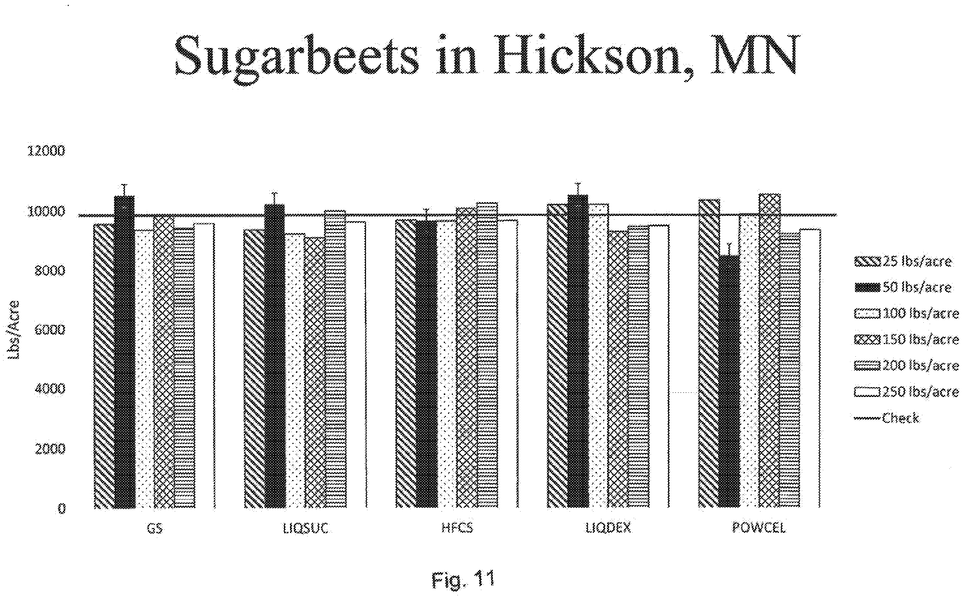

To test the impact of pre-planting application rates and sugar source on sugarbeets, identical field trials using Crystal® brand ACH 260 sugarbeet seed were conducted at the Foxhome and Hickson locations. Planting of the sugarbeet seed and harvest of the sugarbeets were conducted on as close to the same dates as practical so as to have essentially the same length growing season. The statistical results of the various replications/treatments are summarized in Table 8 and Figure 10 for Foxhome and in Table 9 and Figure 11 for Hickson.

**Table 8: Impact of Pre-Planting Sugar Application on Sugarbeets in Foxhome, MN**

| Replication | Treatment | Sugarbeet Yield (Tons/Acre) | Recoverable Sugar Yield (Pounds/Acre) | Recoverable Sugar Yield Increase Compared to Check Average |
|---|---|---|---|---|
| 1 | GS | 32.03 | 8856 | 3.25% |
| 2 | GS | 32.27 | 8707 | 1.52% |
| 3 | GS | 30.85 | 8100 | -5.56% |
| 4 | GS | 31.94 | 9080 | 5.86% |
| 5 | GS | 30.69 | 8345 | -2.70% |
| 6 | GS | 31.80 | 9002 | 4.96% |
| 7 | LIQSUC | 32.17 | 8629 | 0.61% |
| 8 | LIQSUC | 31.21 | 8627 | 0.58% |
| 9 | LIQSUC | 31.79 | 8592 | 0.17% |
| 10 | LIQSUC | 30.26 | 8646 | 0.80% |
| 11 | LIQSUC | 30.23 | 8473 | -1.21% |
| 12 | LIQSUC | 31.04 | 8424 | -1.78% |
| 13 | HFCS | 29.44 | 8102 | -5.54% |
| 14 | HFCS | 31.18 | 8544 | -0.38% |
| 15 | HFCS | 30.32 | 8360 | -2.53% |
| 16 | HFCS | 32.53 | 8884 | 3.58% |
| 17 | HFCS | 31.45 | 8550 | -0.31% |
| 18 | HFCS | 30.73 | 8700 | 1.43% |
| 19 | LIQDEX | 30.43 | 8149 | -4.99% |
| 20 | LIQDEX | 31.23 | 8712 | 1.57% |
| 21 | LIQDEX | 31.81 | 8846 | 3.14% |
| 22 | LIQDEX | 31.89 | 8823 | 2.87% |
| 23 | LIQDEX | 32.20 | 8969 | 4.57% |
| 24 | LIQDEX | 31.63 | 8855 | 3.24% |
| 25 | POWCEL | 32.54 | 8809 | 2.70% |
| 26 | POWCEL | 30.17 | 8758 | 2.11% |
| 27 | POWCEL | 28.81 | 7745 | -9.70% |
| 28 | POWCEL | 31.15 | 9022 | 5.19% |
| 29 | POWCEL | 32.93 | 7550 | -11.97% |
| 30 | POWCEL | 31.54 | 8564 | -0.15% |
| 31 | Untreated -Check | 32.04 | 8764 | N/A |
| 32 | Untreated - Check | 30.98 | 8389 | N/A |

**Table 9: Impact of Pre-Planting Sugar Application on Sugarbeets in Hickson, ND**

| Replication | Treatment | SugarbeetYield (Tons/Acre) | Recoverable Sugar Yield (Pounds/Acre) | Recoverable Sugar Yield Increase Compared to Check Average |
|---|---|---|---|---|
| 1 | GS | 32.73 | 9560 | -2.54% |
| 2 | GS | 35.37 | 10509 | 7.14% |
| 3 | GS | 31.94 | 9360 | -4.58% |
| 4 | GS | 32.34 | 9877 | 0.69% |
| 5 | GS | 31.37 | 9426 | -3.90% |
| 6 | GS | 30. 7 | 9587 | -2.26% |
| 7 | LIQSUC | 28.83 | 9363 | -4.55% |
| 8 | LIQSUC | 32.05 | 10217 | 4.16% |
| 9 | LIQSUC | 28.83 | 9216 | -6.05% |
| 10 | LIQSUC | 31.95 | 9089 | -7.34% |
| 11 | LIQSUC | 32.35 | 9998 | 1.93% |
| 12 | LIQSUC | 32.29 | 9627 | -1.86% |
| 13 | HFCS | 31.76 | 9686 | -1.25% |
| 14 | HFCS | 31.77 | 9666 | -1.46% |
| 15 | HFCS | 32.64 | 9661 | -1.51% |
| 16 | HFCS | 32.04 | 10075 | 2.71% |
| 17 | HFCS | 33.22 | 10253 | 4.53% |
| 18 | HFCS | 32.06 | 9666 | -1.46% |
| 19 | LIQDEX | 32.49 | 10204 | 4.03% |
| 20 | LIQDEX | 33.86 | 10520 | 7.25% |
| 21 | LIQDEX | 33.77 | 10211 | 4.10% |
| 22 | LIQDEX | 31.84 | 9295 | -5.24% |
| 23 | LIQDEX | 31.36 | 9475 | -3.41% |
| 24 | LIQDEX | 31.75 | 9494 | -3.21% |
| 25 | POWCEL | 34.19 | 10356 | 5.58% |
| 26 | POWCEL | 29.65 | 8485 | -13.50% |
| 27 | POWCEL | 33.08 | 9895 | 0.88% |
| 28 | POWCEL | 34.01 | 10546 | 7.51% |
| 29 | POWCEL | 31.01 | 9226 | -5.94% |
| 30 | POWCEL | 32.32 | 9365 | -4.53% |
| 31 | Untreated -Check | 33.6 | 9990 | N/A |
| 32 | Untreated - Check | 33.16 | 9718 | N/A |

As detailed in Table 8 and Figure 10, eighteen of the Foxhome replications demonstrated a yield increase when compared to the average of check treatments 31 and 32. At Foxhome, liquid dextrose (LIQDEX) proved to be the most consistent sugar source for Sugarbeet yield improvement with five of the six applications showing yield improvements, while the granulated sucrose (GS) and liquid sucrose (LIQSUC) each had four of the six treatments showing yield improvement. At Foxhome, high fructose corn syrup (HFCS) proved to be the least successful sugar source with four of the six treatments showing yield decreases as compared to the check treatment averages.

As reflected in Table 9 and Figure 11, only twelve of the Hickson replications demonstrated a yield increase as compared to the check treatment averages. At Hickson, liquid dextrose (LIQDEX) again proved to be one of the best sugar sources for Sugarbeet yield improvement with three of the six treatments showing yield improvements as compared to the check treatment averages. Powdered cellulose (POWCEL) also showed yield improvements in three of the six treatments as compared to the check treatment averages. At Hickson, granulated sucrose (GS), liquid sucrose (LIQSUC) and high fructose corn syrup (HFCS) were the worst performing sugars with each sugar showing negative yield benefits in four of the six treatments as compared to the check treatment averages.

### Soybean Testing at Foxhome and Hickson

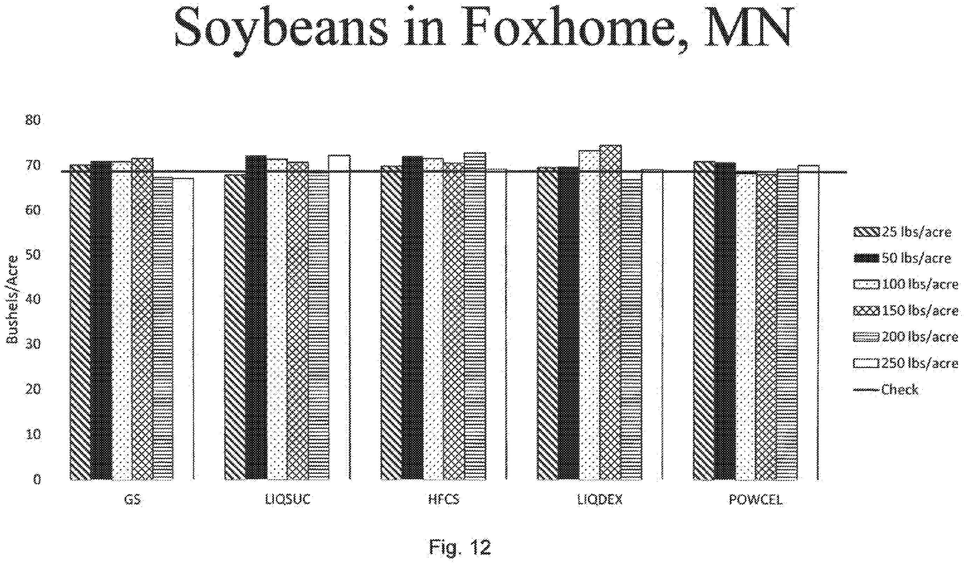

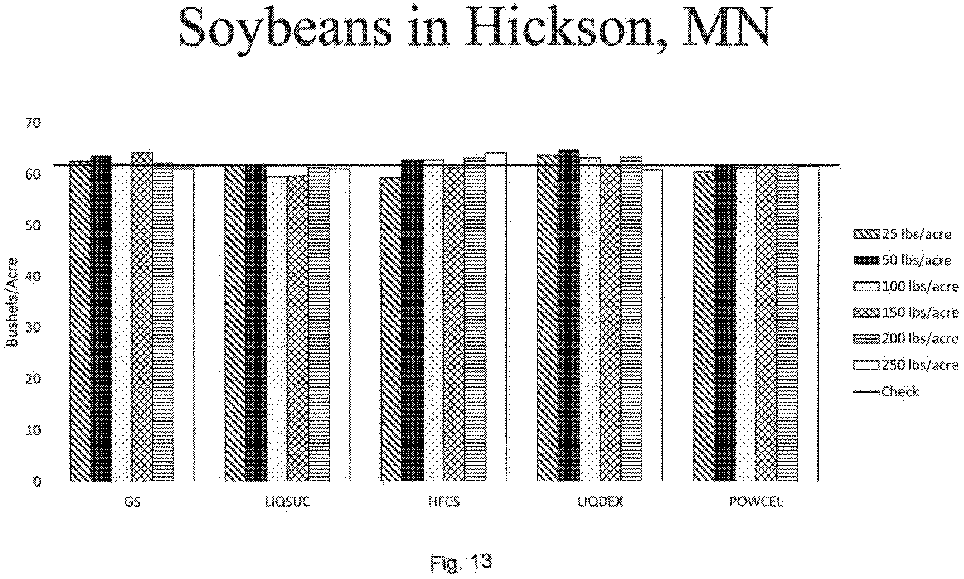

To test the impact of pre-planting application rates and sugar source on soybeans, identical field trials using Syngenta brand soybean seed were conducted at the Foxhome and Hickson locations. Planting of the soybean seed and harvest of the soybeans were conducted on approximately the same dates so as to have essentially the same growing season. The statistical results of the various replications/treatments are summarized in Table 10 and Figure 12 for Foxhome and in Table 11 and Figure 13 for Hickson.

**Table 10: Impact of Pre-Planting Sugar Application on Soybeans in Foxhome, MN**

| Replication | Treatment | Stand Count (cm²) | % Moisture | Yield (Bushels/Acre) | Yield Increase Compared to Check |
|---|---|---|---|---|---|
| 1 | GS | 287.50 | 9.43 | 70.03 | 2.17% |
| 2 | GS | 275 | 9.45 | 70.87 | 3.40% |
| 3 | GS | 280 | 9.50 | 70.78 | 3.27% |
| 4 | GS | 289 | 9.40 | 71.45 | 4.25% |
| 5 | GS | 272 | 9.35 | 67.22 | -1.93% |
| 6 | GS | 285.80 | 9.48 | 66.99 | -2.26% |
| 7 | LIQSUC | 282.80 | 9.45 | 67.82 | -1.05% |
| 8 | LIQSUC | 300.00 | 9.43 | 72.08 | 5.16% |
| 9 | LIQSUC | 283.80 | 9.33 | 71.28 | 4.00% |
| 10 | LIQSUC | 278.80 | 9.55 | 70.57 | 2.96% |
| 11 | LIQSUC | 290.80 | 9.45 | 68.33 | -0.31% |
| 12 | LIQSUC | 278.80 | 9.48 | 72.14 | 5.25% |
| 13 | HFCS | 274.30 | 9.63 | 69.73 | 1.74% |
| 14 | HFCS | 274.30 | 9.45 | 71.97 | 5.00% |
| 15 | HFCS | 285.30 | 9.43 | 71.44 | 4.23% |
| 16 | HFCS | 279.30 | 9.43 | 70.42 | 2.74% |
| 17 | HFCS | 282.00 | 9.50 | 72.72 | 6.10% |
| 18 | HFCS | 278.50 | 9.43 | 69.08 | 0.79% |
| 19 | LIQDEX | 283.80 | 9.45 | 69.43 | 1.30% |
| 20 | LIQDEX | 308.00 | 9.40 | 69.63 | 1.59% |
| 21 | LIQDEX | 277.50 | 9.40 | 73.26 | 6.89% |
| 22 | LIQDEX | 287.50 | 9.38 | 74.43 | 8.59% |
| 23 | LIQDEX | 278.50 | 9.38 | 66.73 | -2.64% |
| 24 | LIQDEX | 270.50 | 9.43 | 68.99 | 0.66% |
| 25 | POWCEL | 279.00 | 9.33 | 70.83 | 3.34% |
| 26 | POWCEL | 262.30 | 9.35 | 70.66 | 3.09% |
| 27 | POWCEL | 268.80 | 9.35 | 68.2 | -0.50% |
| 28 | POWCEL | 284.00 | 9.45 | 68.06 | -0.70% |
| 29 | POWCEL | 272.50 | 9.35 | 69.2 | 0.96% |
| 30 | POWCEL | 277.00 | 9.43 | 70. | 2.13% |
| 31 | Untreated -Check | 272.80 | 9.45 | 68.54 | N/A |

**Table 11: Impact of Pre-Planting Sugar Application on Soybeans in Hickson, ND**

| Replication | Treatment | Stand Count (cm²) | % Moisture | Yield (Bushels/Acre) | Yield Increase Compared to Check Average |
|---|---|---|---|---|---|
| 1 | GS | 72.80 | 9.58 | 62.54 | 1.28% |
| 2 | GS | 69.30 | 9.73 | 63.6 | 3.00% |
| 3 | GS | 71.80 | 9.73 | 62.06 | 0.50% |
| 4 | GS | 69.00 | 9.80 | 64.21 | 3.98% |
| 5 | GS | 71.00 | 9.63 | 62.15 | 0.65% |
| 6 | GS | 72.00 | 9.70 | 61.12 | -1.02% |
| 7 | LIQSUC | 71.00 | 9.75 | 61.90 | 0.24% |
| 8 | LIQSUC | 71.00 | 9.80 | 61.87 | 0.19% |
| 9 | LIQSUC | 70.30 | 9.73 | 59.52 | -3.61% |
| 10 | LIQSUC | 70.00 | 9.65 | 59.71 | -3.30% |
| 11 | LIQSUC | 72.50 | 9.65 | 61.36 | -0.63% |
| 12 | LIQSUC | 67.30 | 9.63 | 61.03 | -1.17% |
| 13 | HFCS | 72.50 | 9.68 | 59.30 | -3.97% |
| 14 | HFCS | 68.00 | 9.78 | 62.78 | 1.67% |
| 15 | HFCS | 67.30 | 9.63 | 62.70 | 1.54% |
| 16 | HFCS | 71.50 | 9.60 | 61.16 | -0.96% |
| 17 | HFCS | 71.00 | 9.65 | 63.12 | 2.22% |
| 18 | HFCS | 67.50 | 9.85 | 64.12 | 3.84% |
| 19 | LIQDEX | 72.80 | 9.55 | 63.69 | 3.14% |
| 20 | LIQDEX | 71.50 | 9.68 | 64.74 | 4.84% |
| 21 | LIQDEX | 69.50 | 9.73 | 63.18 | 2.32% |
| 22 | LIQDEX | 63.80 | 9.63 | 61.63 | -0.19% |
| 23 | LIQDEX | 66.30 | 9.78 | 63.38 | 2.64% |
| 24 | LIQDEX | 71.30 | 9.78 | 60.78 | -1.57% |
| 25 | POWCEL | 70.50 | 9.75 | 60.49 | -2.04% |
| 26 | POWCEL | 70.00 | 9.70 | 61.96 | 0.34% |
| 27 | POWCEL | 71.80 | 9.85 | 61.22 | -0.86% |
| 28 | POWCEL | 71.80 | 9.75 | 61.94 | 0.31% |
| 29 | POWCEL | 69.50 | 9.58 | 61.90 | 0.24% |
| 30 | POWCEL | 71.80 | 9.63 | 61.51 | -0.39% |
| 31 | Untreated -Check | 70.50 | 9.60 | 61.39 | N/A |
| 32 | Untreated - Check | 68.80 | 9.80 | 62.11 | N/A |

As contained in Table 10 and Figure 12, twenty three of the Foxhome replications demonstrated a yield increase when compared to check treatment 31. At Foxhome, high fructose corn syrup (HFCS) proved to be the most consistent sugar source for Soybean yield improvement with each of the six applications showing yield improvements compared to check treatment 31. In addition, liquid dextrose (LIQDEX) showed yield improvements in five of the six applications as compared to the check treatment. At Foxhome, the worst performing sugars: granulated sucrose (GS), liquid sucrose (LIQSUC) and powdered cellulose (POWCEL) each outperformed the check treatment in four of the six treatments. At Foxhome, high fructose corn syrup (HFCS) proved to be the least successful sugar source with four of the six treatments showing yield decreases as compared to the check treatment averages.

As reflected in Table 11 and Figure 13, eighteen of the Hickson replications demonstrated a yield increase as compared to the check treatment averages. At Hickson, granulated sucrose (GS) proved to be one of the best sugar sources for Soybean yield improvement with five of the six treatments showing yield improvements as compared to the check treatment averages. High fructose corn syrup (HFCS) and liquid dextrose (LIQDEX) each showed yield improvements in four of their six treatments as compared to the check treatment averages. Liquid sucrose (LIQSUC) was the worst performing sugar with four of the six treatments showing negative yield benefits as compared to the check treatment averages.

### Corn Testing at Foxhome and Hickson

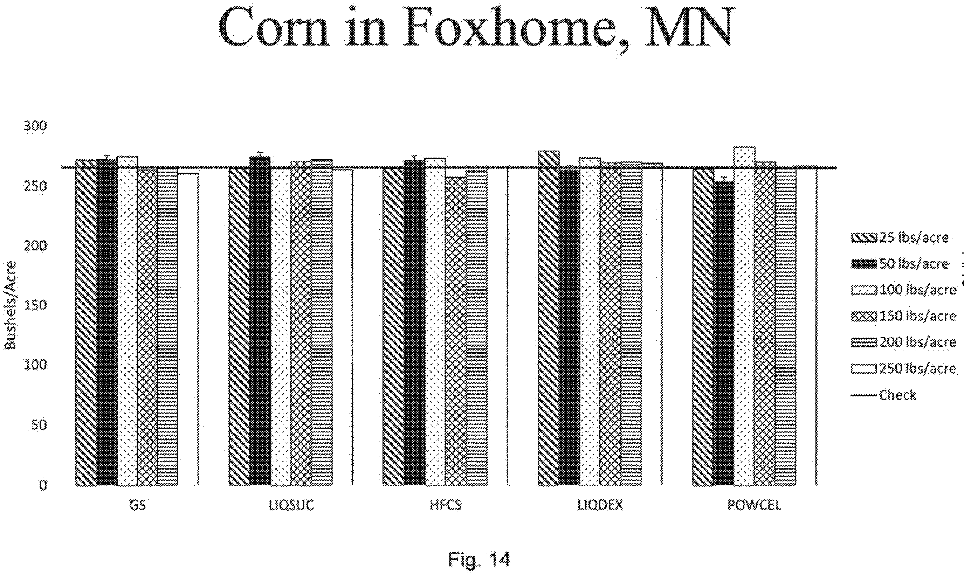

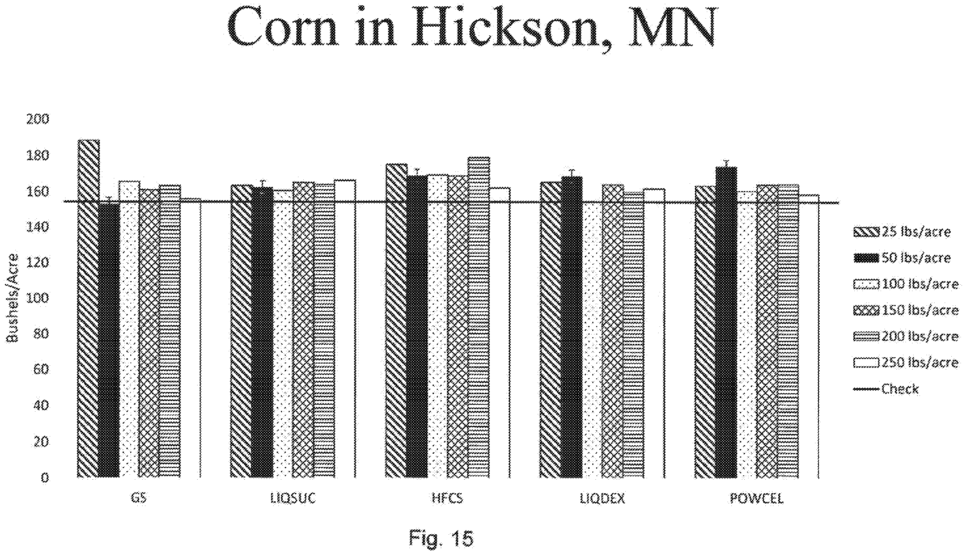

To test the impact of pre-planting application rates and sugar source on corn, identical field trials using Peterson Farms brand corn seed were conducted at the Foxhome and Hickson locations. Planting of the corn seed and harvest of the corn were conducted on the same dates so as to have essentially the same growing season. The statistical results of the various replications/treatments are summarized in Table 12 and Figure 14 for Foxhome and in Table 13 and Figure 15 for Hickson.

**Table 12: Impact of Pre-Planting Sugar Application on Corn in Foxhome, MN**

| Replication | Treatment | Yield (Bushels/Acre) | Yield Increase Compared to Check Average |
|---|---|---|---|
| 1 | GS | 271.62 | 2.20% |
| 2 | GS | 272.13 | 2.40% |
| 3 | GS | 274.80 | 3.40% |
| 4 | GS | 263.34 | -0.91% |
| 5 | GS | 264.61 | -0.43% |
| 6 | GS | 260.71 | -1.90% |
| 7 | LIQSUC | 264.82 | -0.35% |
| 8 | LIQSUC | 274.43 | 3.26% |
| 9 | LIQSUC | 264.79 | -0.36% |
| 10 | LIQSUC | 270.66 | 1.84% |
| 11 | LIQSUC | 271.85 | 2.29% |
| 12 | LIQSUC | 263.78 | -0.75% |
| 13 | HFCS | 265.04 | -0.27% |
| 14 | HFCS | 271.80 | 2.27% |
| 15 | HFCS | 273.33 | 2.85% |
| 16 | HFCS | 257.32 | -3.18% |
| 17 | HFCS | 262.84 | -1.10% |
| 18 | HFCS | 265.87 | 0.04% |
| 19 | LIQDEX | 279.22 | 5.06% |
| 20 | LIQDEX | 263.62 | -0.81% |
| 21 | LIQDEX | 273.62 | 2.96% |
| 22 | LIQDEX | 269.65 | 1.46% |
| 23 | LIQDEX | 270.28 | 1.70% |
| 24 | LIQDEX | 269.21 | 1.30% |
| 25 | POWCEL | 264.44 | -0.50% |
| 26 | POWCEL | 254.30 | -4.31% |
| 27 | POWCEL | 282.73 | 6.39% |
| 28 | POWCEL | 270.53 | 1.79% |
| 29 | POWCEL | 264.73 | -0.39% |
| 30 | POWCEL | 267.01 | 0.47% |
| 31 | Untreated -Check | 265.46 | N/A |
| 32 | Untreated - Check | 266.07 | N/A |

**Table 13: Impact of Pre-Planting Sugar Application on Corn in Hickson, ND**

| Replication | Treatment | Yield (Bushels/Acre) | Yield Increase Compared to Check Average |
|---|---|---|---|
| 1 | GS | 188.56 | 22.03% |
| 2 | GS | 153.24 | -0.83% |
| 3 | GS | 165.78 | 7.29% |
| 4 | GS | 161.20 | 4.32% |
| 5 | GS | 163.58 | 5.86% |
| 6 | GS | 156.06 | 1.00% |
| 7 | LIQSUC | 163.69 | 5.93% |
| 8 | LIQSUC | 162.57 | 5.21% |
| 9 | LIQSUC | 160.94 | 4.15% |
| 10 | LIQSUC | 165.35 | 7.01% |
| 11 | LIQSUC | 164.24 | 6.29% |
| 12 | LIQSUC | 166.53 | 7.77% |
| 13 | HFCS | 175.33 | 13.47% |
| 14 | HFCS | 169.10 | 9.44% |
| 15 | HFCS | 169.66 | 9.80% |
| 16 | HFCS | 169.22 | 9.51% |
| 17 | HFCS | 179.21 | 15.98% |
| 18 | HFCS | 162.35 | 5.07% |
| 19 | LIQDEX | 165.55 | 7.14% |
| 20 | LIQDEX | 168.87 | 9.29% |
| 21 | LIQDEX | 154.66 | 0.09% |
| 22 | LIQDEX | 165.20 | 6.91% |
| 23 | LIQDEX | 160.07 | 3.59% |
| 24 | LIQDEX | 161.96 | 4.81% |
| 25 | POWCEL | 163.62 | 5.89% |
| 26 | POWCEL | 174.25 | 12.77% |
| 27 | POWCEL | 160.68 | 3.99% |
| 28 | POWCEL | 164.26 | 6.30% |
| 29 | POWCEL | 164.42 | 6.41% |
| 30 | POWCEL | 158.76 | 2.74% |
| 31 | Untreated -Check | 156.64 | N/A |
| 32 | Untreated - Check | 152.41 | N/A |

As contained in Table 12 and Figure 14, seventeen of the Foxhome replications demonstrated a yield increase when compared to check treatment 31. At Foxhome, liquid dextrose (LIQDEX) proved to be the most consistent sugar source for Corn yield improvement with five of the six applications showing yield improvements compared to the check treatment average. Each of the other sugar sources: granulated sucrose (GS), liquid sucrose (LIQSUC), high fructose corn syrup (HFCS) and powdered cellulose (POWCEL) showed yield improvements in three of the six applications as compared to the check treatment averages.

As reflected in Table 13 and Figure 15, twenty nine of the Hickson replications demonstrated a yield increase as compared to the check treatment averages. At Hickson, liquid sucrose (LIQSUC), high fructose corn syrup (HFCS), liquid dextrose (LIQDEX) and powdered cellulose (POWCEL) proved to be the best sugar sources for Corn yield improvement with each of their six treatments showing yield improvements as compared to the check treatment averages. In fact, the remaining sugar, granulated sucrose (GS), showed yield improvements in five of the six treatments as compared to the check treatment averages.

### Wheat Testing at Foxhome and Hickson

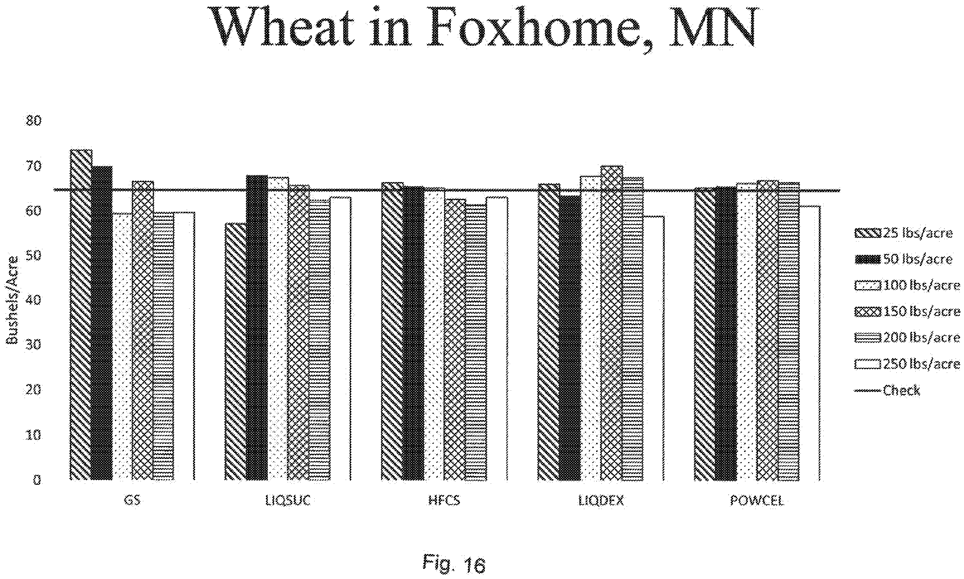

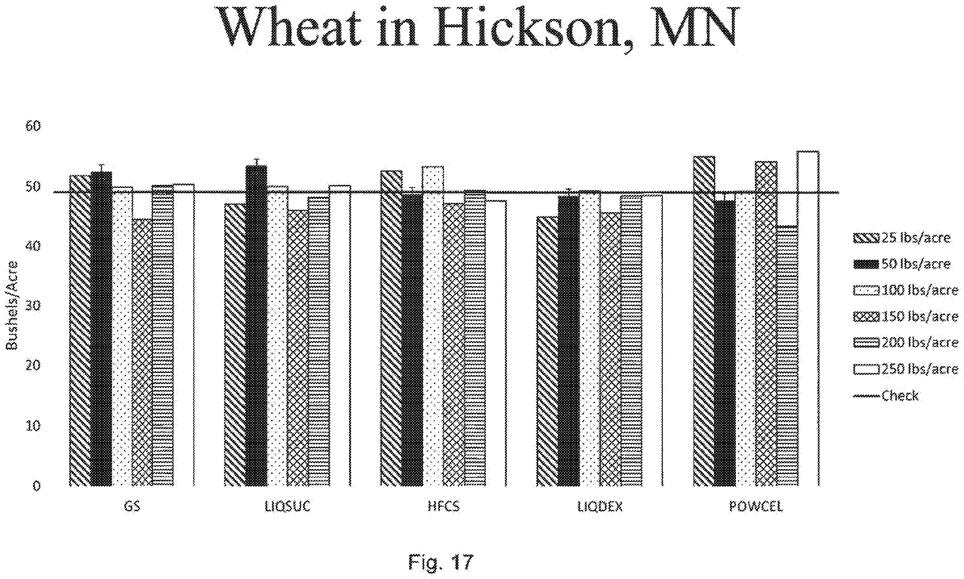

To test the impact of pre-planting application rates and sugar source on wheat, identical field trials using Westbred Mayville wheat seed were conducted at the Foxhome and Hickson locations. Planting of the wheat seed and harvest of the wheat were conducted on the same dates so as to have essentially the same growing season. The statistical results of the various replications/treatments are summarized in Table 14 and Figure 16 for Foxhome and in Table 15 and Figure 17 for Hickson.

**Table 14: Impact of Pre-Planting Sugar Application on Wheat in Foxhome, MN**

| Replication | Treatment | Yield (Bushels/Acre) | Yield Increase Compared to Check Average |
|---|---|---|---|
| 1 | GS | 73.58 | 13.55% |
| 2 | GS | 70.01 | 8.04% |
| 3 | GS | 59.45 | -8.26% |
| 4 | GS | 66.65 | 2.85% |
| 5 | GS | 59.64 | -7.96% |
| 6 | GS | 59.73 | -7.82% |
| 7 | LIQSUC | 57.25 | -11.65% |
| 8 | LIQSUC | 68.06 | 5.03% |
| 9 | LIQSUC | 67.59 | 4.31% |
| 10 | LIQSUC | 65.84 | 1.60% |
| 11 | LIQSUC | 62.49 | -3.56% |
| 12 | LIQSUC | 63.20 | -2.47% |
| 13 | HFCS | 66.45 | 2.55% |
| 14 | HFCS | 65.60 | 1.23% |
| 15 | HFCS | 65.28 | 0.74% |
| 16 | HFCS | 62.73 | -3.19% |
| 17 | HFCS | 61.55 | -5.02% |
| 18 | HFCS | 63.25 | -2.39% |
| 19 | LIQDEX | 66.15 | 2.08% |
| 20 | LIQDEX | 63.62 | -1.82% |
| 21 | LIQDEX | 67.93 | 4.83% |
| 22 | LIQDEX | 70.23 | 8.38% |
| 23 | LIQDEX | 67.55 | 4.24% |
| 24 | LIQDEX | 58.96 | -9.01% |
| 25 | POWCEL | 65.31 | 0.79% |
| 26 | POWCEL | 65.67 | 1.34% |
| 27 | POWCEL | 66.40 | 2.47% |
| 28 | POWCEL | 67.02 | 3.43% |
| 29 | POWCEL | 66.60 | 2.78% |
| 30 | POWCEL | 61.31 | -5.39% |
| 31 | Untreated -Check | 64.17 | N/A |
| 32 | Untreated - Check | 65.44 | N/A |

**Table 15: Impact of Pre-Planting Sugar Application on Wheat in Hickson, ND**

| Replication | Treatment | Yield (Bushels/Acre) | Yield Increase Compared to Check |
|---|---|---|---|
| 1 | GS | 51.82 | 5.45% |
| 2 | GS | 52.47 | 6.78% |
| 3 | GS | 49.94 | 1.63% |
| 4 | GS | 44.54 | -9.36% |
| 5 | GS | 50.25 | 2.26% |
| 6 | GS | 50.40 | 2.56% |
| 7 | LIQSUC | 47.09 | -4.17% |
| 8 | LIQSUC | 53.46 | 8.79% |
| 9 | LIQSUC | 50.09 | 1.93% |
| 10 | LIQSUC | 46.03 | -6.33% |
| 11 | LIQSUC | 48.31 | -1.69% |
| 12 | LIQSUC | 50.24 | 2.24% |
| 13 | HFCS | 52.67 | 7.18% |
| 14 | HFCS | 48.74 | -0.81% |
| 15 | HFCS | 53.37 | 8.61% |
| 16 | HFCS | 47.19 | -3.97% |
| 17 | HFCS | 49.45 | 0.63% |
| 18 | HFCS | 47.64 | -3.05% |
| 19 | LIQDEX | 44.93 | -8.57% |
| 20 | LIQDEX | 48.49 | -1.32% |
| 21 | LIQDEX | 49.38 | 0.49% |
| 22 | LIQDEX | 45.66 | -7.08% |
| 23 | LIQDEX | 48.55 | -1.20% |
| 24 | LIQDEX | 48.62 | -1.06% |
| 25 | POWCEL | 55.03 | 11.99% |
| 26 | POWCEL | 47.70 | -2.93% |
| 27 | POWCEL | 49.28 | 0.28% |
| 28 | POWCEL | 54.21 | 10.32% |
| 29 | POWCEL | 43.46 | -11.56% |
| 30 | POWCEL | 55.91 | 13.78% |
| 31 | Untreated -Check | 49.14 | N/A |
| 32 | Untreated - Check | | N/A |

As contained in Table 14 and Figure 16, eighteen of the Foxhome replications demonstrated a yield increase when compared to the check treatment averages. At Foxhome, powdered cellulose (POWCEL) proved to be the most consistent sugar source for Wheat yield improvement with five of the six applications showing yield improvements compared to the check treatment average. Liquid dextrose (LIQDEX) also showed Wheat yield improvements in four of the six treatments as compared to the check treatment averages. Each of the other sugar sources: granulated sucrose (GS), liquid sucrose (LIQSUC) and high fructose corn syrup (HFCS) showed yield improvements in three of the six applications as compared to the check treatment averages.

As reflected in Table 15 and Figure 17, sixteen of the Hickson replications demonstrated a yield increase as compared to the check treatment averages. At Hickson, granulated sucrose (GS) proved to be the best sugar source for Wheat yield improvement with five of the six treatments showing yield improvements as compared to the check treatment averages. Powdered cellulose (POWCEL) also showed Wheat yield improvements in four of the six treatments as compared to the check treatment averages. Liquid dextrose (LIQDEX) showed yield improvements in only one of the six treatments as compared to the check treatment averages.

### In-Furrow Testing

In addition to testing pre-planting application of sugar, additional in-furrow application of sugar during sugarbeet planting was conducted. This testing was conducted at the Foxhome location and included ten (10) separate treatments. These treatments included one (1) untreated check treatment in which no sugar was applied and constitutes the control element. The treatments included one (1) treatment in which only a conventional fertilizer (liquid ammonium phosphate commonly and hereafter referred to as "10-34-0") was applied in-furrow. Four (4) treatments included the in-furrow application of liquid sugar (hereafter "LIQSUC") at varying rates and/or 10-34-0. Four (4) treatments included the in-furrow application of concentrated raw sugar juice (hereafter "CONCRJ") at varying rates and/ or 10-34-0. Liquid sugar is essentially comprised of sucrose. Concentrated raw juice comprises a raw juice diffused from sugar beets prior to juice purification and consists of approximately 90% sucrose with the balance being organic non-sugars. Liquid sugar, concentrated raw juice and 10-34-0 were all mixed and diluted with water in a tank and a conventional sprayer was configured such that the liquid was sprayed so as to have the desired sugar and fertilizer equivalent. For the sugar applied at rates of three gallons per acre, the sugar mixture was equivalent to 25 pounds per acre of sugar. For the sugar applied at rates of 5 gallons per acre, the sugar mixture was equivalent to an application of approximately 425 pounds per acre of sugar. In each replication, the liquid was applied into the furrow during planting of the sugarbeet seeds. A summary of the in-furrow sugar beet testing is contained in Table 16 below:

**Table 16: Impact of In-Furrow Sugar and/or Fertilizer Application on Sugarbeet Yields**

| Replication | Sugar Type | Sugar Amount (gal/acre) | 10-34-0 Amount (gal/acre) | Sugarbeets (Tons/Acre) | Recoverable Sugar (Pounds/Acred) | Yield Increase Compared to Check |
|---|---|---|---|---|---|---|
| 1 | Check | Check | Check | 23.768443 | 5707.1269 | N/A |
| 2 | LIQSUC | 3 | 0 | 23.418463 | 5777.0474 | 1.23% |
| 3 | LIQSUC | 3 | 3 | 26.3981 | 6437.113 | 12.79% |
| 4 | LIQSUC | 5 | 0 | 24.376105 | 5881.91 | 3.06% |
| 5 | LIQSUC | 5 | 3 | 25.661885 | 6262.2908 | 9.73% |
| 6 | CONCRJ | 3 | 0 | 23.053571 | 5321.7407 | -6.75% |
| 7 | CONCRJ | 3 | 3 | 22.851664 | 5299.5356 | -7.14% |
| 8 | CONCRJ | 5 | 0 | 23.45311 | 5607.4569 | -1.75% |
| 9 | CONCRJ | 5 | 3 | 24.637605 | 5721.5545 | 0.25% |
| 10 | N/A | N/A | 3 | 24.123563 | 5331.4093 | -6.58% |

As shown in Table 16, every in-furrow application of liquid sucrose (LIQSUC) showed an increase in recoverable sugar as compared to the check treatment as well as the treatment involving only the application of 10-34-0. Furthermore, each liquid sucrose replication that also included the application of 10-34-0, showed an increase in recoverable sugar as compared to the replication involving application of the same amount of liquid sugar but with no 10-34-0. Only one of the replications involving the in-furrow application of the concentrated raw sugar juice (CONCRJ) demonstrated a yield improvement over the check replication. Without wishing to be bound by theory, it is believed that the presence of the organic non-sugars within the concentrated raw sugar juice (CONCRJ) may have negatively impacted yield performance, and more specifically, negatively impacted microflora activity.

As suggested previously, it is believed that the application of sugars can enhance soil/growing conditions by providing an initial boost to microflora that are present in the soil. In an attempt to quantify this boost, soil samples were taken during some of the previously discussed trials. These samples were tested using a standard Solvita Soil CO2-Burst Test Kit to generate measurements associated with CO2 respiration which can be used as an indicator of active soil carbon, soil microbial biomass and the potential for nutrient release beneficial to crop production. Generally, the higher the measured levels of CO2, the more advantageous the soil is for crop production.

During the soybean testing conducted in Hickson (Table 11), pre-emergent soil samples were taken from the two check treatments and from the 50, 150, and 250 pound/acre applications of granulated sucrose (GS), liquid sucrose (LIQSUC), high fructose corn syrup (HFCS), liquid dextrose (LIQDEX) and powdered cellulose (POWCEL). The results of the CO2-Burst Testing are summarized in Table 17 below (using the replication designations from Table 7):

**Table 17: CO2 Burst Testing for Soybean in Hickson**

| Replication | Sugar Type | Sugar Amount (pounds/acre) | CO2 Burst ppm | CO2 Increase as Compared to Check Average |
|---|---|---|---|---|
| 31 | Check | N/A | 44 | N/A |
| 32 | Check | N/A | 47 | N/A |
| 2 | GS | 50 | 63 | 38.46% |
| 4 | GS | 150 | 75 | 64.84% |
| 6 | GS | 250 | 53 | 16.48% |
| 8 | LIQSUC | 50 | 49 | 7.69% |
| 10 | LIQSUC | 150 | 45 | -1.10% |
| 12 | LIQSUC | 250 | 55 | 20.88% |
| 14 | HFCS | 50 | 53 | 16.48% |
| 16 | HFCS | 150 | 67 | 47.25% |
| 18 | HFCS | 250 | 39 | -14.29% |
| 20 | LIQDEX | 50 | 54 | 18.68% |
| 22 | LIQDEX | 150 | 66 | 45.05% |
| 24 | LIQDEX | 250 | 43 | -5.49% |
| 26 | POWCEL | 50 | 80 | 75.82% |
| 28 | POWCEL | 150 | 61 | 34.07% |
| 30 | POWCEL | 250 | 47 | 3.30% |

As illustrated in Table 17, results of the CO2 respiration test demonstrated twelve of the fifteen treatments or 80% of the replications had increased CO2 Burst concentrations as compared to the check treatment averages. Not only did 80% of the replications show enhanced CO2 Burst concentrations, but 10 of the 15 replications (67% of the replications) showed CO2 Burst increases in excess of 16%. Furthermore, CO2 Burst concentration increases were found across each of the sugar types tested. With one exception (Replication 10), the worst performing replication for each sugar type was at the highest application level of 250 pounds/acre, which may be an indication that there are upper application limits of monosaccharides, and/or disaccharides and/or polysaccharides in which the microflora can flourish.

As demonstrated by the testing and results contained in Table 17, the addition of monosaccharides, and/or disaccharides and/or polysaccharides can provide a beneficial pre-emergent environment for plant growth. Furthermore, based upon the in-furrow treatment data as contained in Table 16, it is believed that the in-furrow application of monosaccharides, disaccharides and polysaccharides, either alone or in combination with fertilizers such as, for example, 10-34-0 provides a readily available and consumable carbohydrate source to existing soil microflora such that the beneficial impacts of the CO2 Burst concentrations coincide directly with initial plant growth stages. As such, it is believed that in-furrow application of monosaccharides, and/or disaccharides and/or polysaccharides can comprise a preferred method of application and coincide with more consistent crop yield improvements. In addition, the in-furrow application of monosaccharides, and/or disaccharides and/or polysaccharides either alone, or in combination with a conventional fertilizer, can be performed simultaneous with seed planting so as to not require additional applications or further field activity.

Although specific examples have been illustrated and described herein, it will be appreciated by those of ordinary skill in the art that any arrangement calculated to achieve the same purpose could be substituted for the specific examples shown. This application is intended to cover adaptations or variations of the present subject matter. Therefore, it is intended that the invention be defined by the attached claims and their legal equivalents.

## Claims

1. A method for improving crop yield, comprising:
applying sugar to a field prior to or during the planting of a crop, to provide a beneficial pre-emergent environment for plant growth of the crop, wherein the sugar is applied at a rate of at least 2.8 grams per square meter (25 pounds per acre) and not exceeding 28.02 grams per square meter (250 pounds per acre).

2. The method of claim 1, wherein the step of applying comprises two or more sequential applications of the sugar to provide the beneficial pre-emergent environment, wherein a sum total of the applications of the sugar exceeds the rate of at least 2.8 grams per square meter (25 pounds per acre) and does not exceed 28.02 grams per square meter (250 pounds per acre).

3. The method of claim 1, wherein the crop is selected from the group comprising: sugarbeets, soybeans, corn, wheat, canola, winter oilseed rape, hay land, pasture land, cotton, sorghum, sugarcane, tobacco, potatoes, tomatoes, onions, melons, beans, gourds, fruits, nuts, vines and the like.

4. The method of claim 1, wherein the sugar is applied at a rate of at least 5.6 grams per square meter (50 pounds per acre).

5. The method of claim 1, wherein the sugar is applied at a rate of at least 11.21 grams per square meter (100 pounds per acre).

6. The method of claim 1, wherein the sugar is applied at a rate of at least 22.42 grams per square meter (200 pounds per acre).

7. The method of claim 1, wherein the sugar comprises a monosaccharide, and/or a disaccharide and/or a polysaccharide.

8. The method of claim 7, wherein the monosaccharide is selected from the group consisting essentially of: dextrose, fructose, glucose, galactose and combinations thereof.

9. The method of claim 7, wherein the disaccharide is selected from the group consisting essentially of: sucrose, lactose, maltose, trehalose and combinations thereof.

10. The method of claim 7, wherein the polysaccharide is selected from the group consisting essentially of: amylase, amylopectin, glycogen, cellulose, glycosaminoglycans and combinations thereof.

11. The method of claim 1, wherein the sugar comprises sucrose.

12. The method of claim 11, wherein the sucrose is in a solid form, said solid form being granulated white sugar.

13. The method of claim 1, wherein the sugar comprises fructose.

14. The method of claim 13, wherein the fructose is in a liquid form, said liquid form being high fructose corn syrup.

## Patentansprüche

1. Verfahren zur Verbesserung des Ernteertrags, umfassend:
die Anwendung von Zucker auf einem Feld vor oder während des Pflanzens einer Kulturpflanze, zur Bereitstellung einer günstigen Vorauflaufumgebung für das Pflanzenwachstum der Kulturpflanze, wobei der Zucker in einer Rate von mindestens 2,8 Gramm pro Quadratmeter und nicht mehr als 28,02 Gramm pro Quadratmeter angewendet wird.

2. Verfahren nach Anspruch 1, wobei der Anwendungsschritt zwei oder mehr aufeinanderfolgende Anwendungen des Zuckers zur Bereitstellung der günstigen Vorauflaufumgebung umfasst, wobei die Gesamtsumme der Anwendungen des Zuckers über einer Rate von mindestens 2,8 Gramm pro Quadratmeter liegt und nicht über 28,02 Gramm pro Quadratmeter liegt.

3. Verfahren nach Anspruch 1, wobei die Kulturpflanze aus der folgenden Gruppe ausgewählt ist: Zuckerrüben, Sojabohnen, Mais, Weizen, Canola, Winterraps, Heuland, Weideland, Baumwolle, Sorghum, Zuckerrohr, Tabak, Kartoffeln, Tomaten, Zwiebeln, Melonen, Bohnen, Kürbisgewächsen, Früchten, Nüssen, Reben und dergleichen.

4. Verfahren nach Anspruch 1, wobei der Zucker in einer Rate von mindestens 5,6 Gramm pro Quadratmeter angewendet wird.

5. Verfahren nach Anspruch 1, wobei der Zucker in einer Rate von mindestens 11,21 Gramm pro Quadratmeter anwendet wird.

6. Verfahren nach Anspruch 1, wobei der Zucker in einer Rate von mindestens 22,42 Gramm pro Quadratmeter angewendet wird.

7. Verfahren nach Anspruch 1, wobei der Zucker ein Monosaccharid und/oder ein Disaccharid und/oder ein Polysaccharid umfasst.

8. Verfahren nach Anspruch 7, wobei das Monosaccharid aus der im Wesentlichen aus Dextrose, Fructose, Glucose, Galactose und Kombinationen davon bestehenden Gruppe ausgewählt ist.

9. Verfahren nach Anspruch 7, wobei das Disaccharid aus der im Wesentlichen aus Saccharose, Lactose, Maltose, Trehalose und Kombinationen davon bestehenden Gruppe ausgewählt ist.

10. Verfahren nach Anspruch 7, wobei das Polysaccharid aus der im Wesentlichen aus Amylase, Amylopektin, Glykogen, Cellulose, Glykosaminoglykanen und Kombinationen davon bestehenden Gruppe ausgewählt ist.

11. Verfahren nach Anspruch 1, wobei der Zucker Saccharose umfasst.

12. Verfahren nach Anspruch 11, wobei die Saccharose in fester Form vorliegt, wobei es sich bei der festen Form um granulierten weißen Zucker handelt.

13. Verfahren nach Anspruch 1, wobei der Zucker Fructose umfasst.

14. Verfahren nach Anspruch 13, wobei die Fructose in flüssiger Form vorliegt, wobei es sich bei der flüssigen Form um Maissirup mit hohem Fructosegehalt handelt.

## Revendications

1. Méthode destinée à l'amélioration du rendement de cultures, comprenant :
l'application de sucre à une parcelle avant ou pendant le semis d'une culture, afin de fournir un environnement pré-levée bénéfique à la croissance végétale de la culture, où le sucre est appliqué selon un taux d'au moins 2,8 grammes par mètre carré (25 livres par acre) et n'excédant pas 28,02 grammes par mètre carré (250 livres par acre).

2. Méthode selon la revendication 1, dans laquelle l'étape d'application comprend deux, ou plus, applications séquentielles du sucre, afin de fournir l'environnement pré-levée bénéfique, où une somme totale des applications du sucre excède le taux d'au moins 2,8 grammes par mètre carré (25 livres par acre) et n'excède pas 28,02 grammes par mètre carré (250 livres par acre).

3. Méthode selon la revendication 1, dans laquelle la culture est choisie dans le groupe constitué par : les betteraves à sucre, les sojas, le maïs, le blé, le canola, le colza d'hiver, les terres à foin, les terres à pâturage, le coton, le sorgho, la canne à sucre, le tabac, les pommes de terre, les tomates, les oignons, les melons, les haricots, les cucurbitacées, les fruits, les noix, les vignes et similaires.

4. Méthode selon la revendication 1, dans laquelle le sucre est appliqué selon un taux d'au moins 5,6 grammes par mètre carré (50 livres par acre).

5. Méthode selon la revendication 1, dans laquelle le sucre est appliqué selon un taux d'au moins 11,21 grammes par mètre carré (100 livres par acre).

6. Méthode selon la revendication 1, dans laquelle le sucre est appliqué selon un taux d'au moins 22,42 grammes par mètre carré (200 livres par acre).

7. Méthode selon la revendication 1, dans laquelle le sucre comprend un monosaccharide, et/ou un disaccharide, et/ou un polysaccharide.

8. Méthode selon la revendication 7, dans laquelle le monosaccharide est choisi dans le groupe constitué essentiellement par : le dextrose, le fructose, le glucose, le galactose, et des combinaisons de ceux-ci.

9. Méthode selon la revendication 7, dans laquelle le disaccharide est choisi dans le groupe constitué essentiellement par : le saccharose, le lactose, le maltose, le tréhalose, et des combinaisons de ceux-ci.

10. Méthode selon la revendication 7, dans laquelle le polysaccharide est choisi dans le groupe constitué essentiellement par : l'amylase, l'amylopectine, le glycogène, la cellulose, les glycosaminoglycanes, et des combinaisons de ceux-ci.

11. Méthode selon la revendication 1, dans laquelle le sucre comprend du saccharose.

12. Méthode selon la revendication 11, dans laquelle le saccharose se trouve sous forme solide, ladite forme solide étant du sucre blanc en poudre.

13. Méthode selon la revendication 1, dans laquelle le sucre comprend du fructose.

14. Méthode selon la revendication 13, dans laquelle le fructose se trouve sous forme liquide, ladite forme liquide étant du sirop de glucose à haute teneur en fructose.
